(19) Europäisches Patentamt
European Patent Office
Office européen des brevets

(11) **EP 4 474 496 A1**

(12) **EUROPEAN PATENT APPLICATION**
published in accordance with Art. 153(4) EPC

(43) Date of publication:
**11.12.2024 Bulletin 2024/50**

(21) Application number: **22935769.4**

(22) Date of filing: **26.12.2022**

(51) International Patent Classification (IPC):
*C21D 9/46* (2006.01)  *C22C 18/00* (2006.01)
*C22C 38/00* (2006.01)  *C22C 38/06* (2006.01)
*C22C 38/60* (2006.01)

(52) Cooperative Patent Classification (CPC):
**C21D 9/46; C22C 18/00; C22C 38/00; C22C 38/06;
C22C 38/60**

(86) International application number:
**PCT/JP2022/047834**

(87) International publication number:
**WO 2023/188643 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022059630**

(71) Applicant: **JFE Steel Corporation
Tokyo 100-0011 (JP)**

(72) Inventors:
• **NAKAGAITO, Tatsuya**
  **Tokyo 100-0011 (JP)**
• **KAWASAKI, Yoshiyasu**
  **Tokyo 100-0011 (JP)**
• **TERASHIMA, Shotaro**
  **Tokyo 100-0011 (JP)**

(74) Representative: **Hoffmann Eitle
Patent- und Rechtsanwälte PartmbB
Arabellastraße 30
81925 München (DE)**

(54) **GALVANIZED STEEL SHEET, MEMBER, AND METHODS FOR PRODUCING THESE**

(57)     There is provided a galvanized steel sheet having excellent uniform deformation properties and local deformation properties and having a tensile strength of 980 MPa or more, a member, and methods for manufacturing them.

The galvanized steel sheet includes a steel sheet and a galvanized layer formed on the steel sheet, the steel sheet having a predetermined chemical composition and a microstructure containing, in terms of area fraction, ferrite: 20% to 70% and martensite: 30% to 80%, in which each of the proportion of low-Mn ferrite and the proportion of high-Mn ferrite in the entire ferrite is 20% or more and 80% or less in terms of area fraction, martensite has an average crystal grain size of 10 um or less, and the amount of diffusible hydrogen in steel is 0.30 mass.ppm or less.

EP 4 474 496 A1

**Description**

Technical Field

The present invention relates to a high strength galvanized steel sheet having excellent ductility and used for an automotive steel sheet, a high strength member, and methods for producing them.

Background Art

In recent years, improvement of fuel consumption of automobiles has been an important issue from the viewpoint of global environmental conservation. To address this, there has been a growing trend to reduce the weight of automotive bodies themselves by increasing the strength of materials for automotive bodies to reduce the thickness of materials. However, higher strength of steel sheets leads to lower ductility, i.e., a deterioration in formability. For this reason, there is currently a demand for the development of materials having both high strength and high formability. Furthermore, in consideration of a recent high demand for improvement in corrosion resistance of automobiles, many developments have been made on high-tensile hot-dip galvanized steel sheets.

In response to such demands, there have been developed high strength steel sheets composed of various composite microstructures, such as dual phase steel (DP steel) of ferrite and martensite, and TRIP steel utilizing transformation induced plasticity of retained austenite. For example, Patent Literature 1 discloses a high-strength hot-dip galvanized steel sheet having a DP microstructure of ferrite and martensite and high formability. Furthermore, Patent Literature 2 proposes a hot-dip galvannealed steel sheet with excellent formability. This steel sheet contains a large amount of Si, which ensures retained $\gamma$, thereby achieving high ductility.

These DP steel and TRIP steel have excellent uniform deformation properties but have a problem of poor local deformation properties. The local deformation properties are deformation properties from the time when necking occurs in the final stage of uniform deformation and deformation proceeds locally to the time when fracture occurs. A deterioration in local deformation properties leads to a deterioration in stretch flangeability and bendability. Particularly, for high strength steel sheets, stretch flange forming and bending are important forming methods, and it is important to enhance local deformation properties in addition to uniform deformation properties.

Citation List

Patent Literature

PTL 1: Japanese Unexamined Patent Application Publication No. 2010-106323
PTL 2: Japanese Unexamined Patent Application Publication No. 11-279691

Summary of Invention

Technical Problem

It is an object of the present invention to provide a galvanized steel sheet having excellent uniform deformation properties and local deformation properties and having a tensile strength TS of 980 MPa or more, a member, and methods for manufacturing them.

Here, the tensile strength TS refers to a tensile strength obtained by performing a tensile test at a strain rate of $10^{-3}$/s in accordance with the requirements of JIS Z2241 (2011).

The term "excellent uniform deformation properties" indicates that the product, $TS \times T. El$, of the total elongation T. El, which is obtained by performing a tensile test at a strain rate of $10^{-3}$/s in accordance with the requirements of JIS Z2241 (2011), and the tensile strength TS is 17,000 MPa-% or more.

The term "excellent local deformation properties" indicates that a tensile test is performed at a strain rate of $10^{-3}$/s in accordance with the requirements of JIS Z2241 (2011), and the ultimate deformability $\varepsilon l$ calculated from the following formula (2) is 0.70 or more.

$$\varepsilon l = -\{\ln(W/W0) + \ln(T/T0)\} \cdots (2)$$

where $\varepsilon l$ is the ultimate deformability, W is the width (mm) of the fracture surface of a test piece for the tensile test after the tensile test, W0 is the width (mm) of the test piece for the tensile test before the tensile test, T is the thickness (mm) of the fracture surface of the test piece for the tensile test after the tensile test, and T0 is the thickness (mm) of the test piece for the tensile test before the tensile test.

Solution to Problem

The inventors have conducted intensive studies on the manufacture of a high-strength composite microstructure steel sheet having excellent ductility by means of a continuous annealing line or a continuous galvanizing line from the viewpoint of the chemical composition and microstructure of a steel sheet.

It was thus found that both the uniform deformation properties and the local deformation properties can be improved by allowing the microstructure of a high-strength composite microstructure steel sheet to contain high-Mn ferrite with a high Mn concentration in addition to low-Mn ferrite with a low Mn concentration and furthermore by reducing the amount of diffusible hydrogen in the steel.

Compared to hard phases such as martensite, ferrite is a soft phase with low C and Mn concentrations and is effective in improving uniform deformation properties. However, since ferrite has a large difference in hardness from hard phases such as martensite, voids are easily formed at the interface therebetween. The voids formed are connected together to cause a deterioration in local deformation properties. To address such problems, the inventors have found that local deformation properties can be significantly improved by allowing a steel sheet to contain a specific amount of high-Mn ferrite having a Mn concentration of 1.05 or more times and 2.5 or less times the Mn concentration (Mn content) in the steel sheet, while maintaining high uniform deformation properties. The mechanism of the improvement of the local deformation properties by the incorporation of the high-Mn ferrite is not clear, but it is considered that the formation of the high-Mn ferrite effectively acts on the formation of voids at the interface between ferrite and martensite. It was also found that a reduction in the amount of diffusible hydrogen in steel effectively acts on the improvement of ductility, and particularly the local deformation properties are greatly improved.

The present invention has been made based on the above findings.

[1] A galvanized steel sheet includes a steel sheet and a galvanized layer formed on the steel sheet,

the steel sheet having a chemical composition containing,
by mass%:

C: 0.08% or more and 0.3% or less,
Si: 0.5% or more and 3.0% or less,
Mn: 2.0% or more and 3.5% or less,
P: 0.1% or less,
S: 0.01% or less,
Al: 0.01% or more and 0.1% or less, and
N: 0.015% or less,

the balance being Fe and incidental impurities,
the steel sheet having a microstructure in which the area fraction of ferrite is 20% or more and 70% or less, and the area fraction of martensite is 30% or more and 80% or less,
in which the ferrite contains:

low-Mn ferrite having a Mn concentration of 0.80 or more times and 0.95 or less times the Mn content of the steel sheet, and
high-Mn ferrite having a Mn concentration of 1.05 or more times and 2.5 or less times the Mn content of the steel sheet,
the proportion of the low-Mn ferrite in the entire ferrite is 20% or more and 80% or less in terms of area fraction,
the proportion of the high-Mn ferrite in the entire ferrite is 20% or more and 80% or less in terms of area fraction,
the martensite has an average crystal grain size of 10 um or less, and
the amount of diffusible hydrogen in steel is 0.30 mass.ppm or less.

[2] In the galvanized steel sheet described in [1], the chemical composition contains,
by mass%, one or two selected from:

Ti: 0.2% or less, and
Nb: 0.2% or less.

[3] In the galvanized steel sheet described in [1] or [2], the chemical composition contains, by mass%, one or two or more selected from:

Cr: 1.0% or less,
Mo: 1.0% or less, and
V: 1.0% or less.

[4] In the galvanized steel sheet described in any one of [1] to [3], the chemical composition contains, by mass%,
B: 0.005% or less.

[5] In the galvanized steel sheet described in any one of [1] to [4], the chemical composition contains, by mass%, one or two selected from:

Ca: 0.005% or less, and
Sb: 0.03% or less.

[6] In the galvanized steel sheet described in any one of [1] to [5], when a region extending from a surface of the steel sheet to a position 200 um or less from the surface of the steel sheet in the thickness direction is defined as a surface layer, the surface layer has a surface soft layer having a Vickers hardness of 85% or less of the Vickers hardness at a 1/4 position of a sheet thickness,

when nanohardness is measured at 300 or more points in a 50 um × 50 um region of a sheet face at each of the 1/4 position and the 1/2 position of the depth of the surface soft layer in the thickness direction from the surface of the steel sheet,
the proportion of the number of measurement points exhibiting a nanohardness of 7.0 GPa or more on the sheet face at the 1/4 position of the depth of the surface soft layer in the thickness direction from the surface of the steel sheet is 0.10 or less based on the total number of measurement points at the 1/4 position of the depth of the surface soft layer in the thickness direction, the standard deviation $\sigma$ of the nanohardness on the sheet face at the 1/4 position of the depth of the surface soft layer in the thickness direction from the surface of the steel sheet is 1.8 GPa or less, and
the standard deviation $\sigma$ of the nanohardness of the sheet face at the 1/2 position of the depth of the surface soft layer in the thickness direction from the surface of the steel sheet is 2.2 GPa or less.

[7] The galvanized steel sheet described in any one of [1] to [6] further includes a coated metal layer formed between the steel sheet and the galvanized layer on one or both sides of the galvanized steel sheet.

[8] In the galvanized steel sheet described in any one of [1] to [7], the galvanized layer has an Fe content of 8 to 15 mass%, and a coating weight per side of 20 to 120 g/m$^2$.

[9] A member is obtained using the galvanized steel sheet described in any one of [1] to [8].

[10] A method for manufacturing a galvanized steel sheet includes:

a hot rolling step of hot-rolling a steel slab having the chemical composition described in any one of [1] to [5] to provide a hot rolled steel sheet having a microstructure having a total area fraction of bainite and martensite of 80% or more;
a pickling step of pickling the resulting hot rolled steel sheet;
after the pickling step, a cold rolling step of performing cold rolling at a cold rolling reduction ratio of 30% or more and 80% or less to provide a cold rolled steel sheet;
a continuous annealing step of subjecting the cold rolled steel sheet to continuous annealing;
after the continuous annealing step, a first cooling step of cooling the resulting cold rolled steel sheet to 550°C or lower at an average cooling rate of 3 °C/s or more and 50 °C/s or less in a temperature range of 750°C to 550°C;
after the first cooling step, a galvanizing step of performing galvanizing treatment;
a second cooling step of cooling a coated steel sheet after the galvanizing step to 100°C or lower; and
a reheating step of holding the coated steel sheet after the second cooling step in a temperature range of 150°C to 450°C for 10 seconds or more and 72 hours or less,
wherein in the continuous annealing step,
an average heating rate from 500°C to 700°C is 3 °C/s or more,
D in the following formula (1) satisfies $1.0 \times 10^{-6}$ or more and $8.0 \times 10^{-6}$ or less at 780°C or higher and lower than 940°C,
heating is performed to a maximum arrival temperature of 780°C or higher and lower than or equal to (an Ac$_3$ point

- 20°C), and

a hydrogen concentration in an annealing furnace in a temperature range of 780°C or higher is 1 vol% or more and 20 vol% or less,

[Math. 1]

$$D = \sum_{i=0}^{15} ((0.486 \times \exp(-33200/(T_i + 268)) \times t_i))^{1/2}$$

$\cdots$ formula (1)

where in formula (1),

$t_i$: a residence time (s) in a temperature range of $T_i$°C or higher and lower than $T_i$ + 10°C,

$T_i$ (°C): 780 + i × 10 (i: an integer of 0 to 15), and

the residence time $t_i$ (s) in a temperature range higher than the maximum arrival temperature is 0 seconds.

[11] In the method for manufacturing a galvanized steel sheet described in [10], the continuous annealing in the continuous annealing step is performed in an atmosphere having a dew point: -30°C or higher.

[12] The method for manufacturing a galvanized steel sheet described in [10] or [11] further includes a metal coating step of subjecting one or both sides of the cold rolled steel sheet after the cold rolling step and before the continuous annealing step to metal coating to form a coated metal layer.

[13] The method for manufacturing a galvanized steel sheet described in any one of [10] to [12] further includes an alloying treatment step of subjecting the coated steel sheet to alloying treatment in a temperature range of 480°C to 560°C for 5 to 60 seconds after the galvanizing step and before the second cooling step.

[14] A method for manufacturing a member includes a step of subjecting the galvanized steel sheet described in any one of [1] to [8] to at least one of forming and joining to form a member.

Advantageous Effects of Invention

According to the present invention, provided are a galvanized steel sheet having excellent uniform deformation properties and local deformation properties and having a tensile strength TS of 980 MPa or more, a member, and methods for manufacturing them. The galvanized steel sheet of the present invention can be suitably used as a material for automotive parts.

Brief Description of Drawings

[Fig. 1] (a) illustrates U-bending (primary bending) in a U-bending + close bending test of an example (Example 2). (b) illustrates contact bending (secondary bending) in the U-bending + close bending test of the example (Example 2).

[Fig. 2] (a) illustrates V-bending (primary bending) in a V-bending + orthogonal VDA bending test of the example (Example 2). (b) illustrates the orthogonal VDA bending (secondary bending) in the V-bending + orthogonal VDA bending test of the example (Example 2).

[Fig. 3] (a) is an elevation view of a test member in which a hat-shaped member and a steel sheet are spot-welded together, the test member being produced for an axial crushing test of the example (Example 2). (b) is a perspective view of the test member illustrated in Fig. 3(a). (c) is a schematic view for illustrating the axial crushing test of the example (Example 2).

Description of Embodiments

The present invention will be specifically described.

[Galvanized Steel Sheet]

A galvanized steel sheet of the present invention includes a steel sheet and a galvanized layer formed on the steel sheet, the steel sheet having a chemical composition containing, by mass%, C: 0.08% or more and 0.3% or less, Si: 0.5% or more and 3.0% or less, Mn: 2.0% or more and 3.5% or less, P: 0.1% or less, S: 0.01% or less, Al: 0.01% or more and 0.1% or less, and N: 0.015% or less, the balance being Fe and incidental impurities, the steel sheet having a microstructure in which the area fraction of ferrite is 20% or more and 70% or less, and the area fraction of martensite is 30% or more and 80% or less, in which the ferrite contains low-Mn ferrite having a Mn concentration of 0.80 or more times and 0.95 or less times the Mn concentration (Mn content) in the steel sheet, and high-Mn ferrite having a Mn concentration of 1.05 or more times and 2.5 or less times the Mn concentration (Mn content) in the steel sheet, the proportion of the low-Mn ferrite in the entire ferrite is 20% or more and 80% or less in terms of area fraction, the proportion of the high-Mn ferrite in the entire ferrite is 20% or more and 80% or less in terms of area fraction, the martensite has an average crystal grain size of 10 um or less, and the amount of diffusible hydrogen in steel is 0.30 mass.ppm or less.

The reason why the chemical composition of the steel sheet is limited to the above range in the present invention will be described. The symbol of "%" regarding the chemical composition indicates "mass%" unless otherwise specified.

C: 0.08% or More and 0.3% or Less

C is an essential element for forming martensite and ensuring a desired strength. For this reason, the C content needs to be 0.08% or more. A C content of more than 0.3% leads to a deterioration in weldability. Thus, the C content is 0.08% or more and 0.3% or less. The C content is preferably 0.10% or more. The C content is preferably 0.25% or less, more preferably 0.20% or less.

Si: 0.5% or More and 3.0% or Less

Si is an element effective in strengthening steel, and is also useful for forming high-Mn ferrite. Such effects are obtained at a Si content of 0.5% or more. A Si content of more than 3.0% results in a deterioration in the surface properties due to Si-containing scale formed during hot rolling. Thus, the Si content is 0.5% or more and 3.0% or less. The Si content is preferably 0.7% or more. The Si content is preferably 2.0% or less.

Mn: 2.0% or More and 3.5% or Less

Mn is an element effective in strengthening steel, and is also an element necessary for the formation of high-Mn ferrite. To ensure the desired effects, the Mn content needs to be 2.0% or more. A Mn content of more than 3.5% leads to decreases in weldability and formability. Thus, the Mn content is 2.0% or more and 3.5% or less. The Mn content is preferably 2.2% or more. The Mn content is preferably 3.0% or less.

P: 0.1% or Less

P is an element effective in strengthening steel. However, a P content of more than 0.1% leads to decreases in workability and toughness. Thus, the P content is 0.1% or less. The P content is preferably 0.05% or less, more preferably 0.02% or less.
The lower limit of the P content is not particularly limited, but is preferably 0.003% or more from the viewpoint of production costs.

S: 0.01% or Less

S forms inclusions such as MnS to lead to a decrease in formability; thus, the S content is preferably as low as possible, and the S content is 0.01% or less. The S content is preferably 0.005% or less, more preferably 0.003% or less. The lower limit of the S content is not particularly limited, but is preferably 0.0003% or more from the viewpoint of production costs.

Al: 0.01% or More and 0.1% or Less

Al acts as a deoxidizing agent and is an element effective in improving the cleanliness of steel, and is preferably added in the deoxidizing step. When the Al content is less than 0.01%, the effect of the addition is poor. Thus, the lower limit of the Al content is 0.01%. The Al content is preferably 0.02% or more. Excessive addition of Al deteriorates the quality of a slab during steelmaking. Thus, the Al content is 0.1% or less. The Al content is preferably 0.06% or less.

N: 0.015% or Less

A N content of more than 0.015% results in the increase of coarse AlN inside the steel sheet, thereby deteriorating the fatigue property. Thus, the N content is 0.015% or less. The N content is preferably 0.010% or less. Although the lower limit of the N content is not particularly limited, the N content is preferably 0.001% or more.

The steel sheet of the present invention has a chemical composition containing the above-mentioned components, the balance being Fe (iron) and incidental impurities. In particular, the steel sheet according to an embodiment of the present invention preferably has a chemical composition containing the above-mentioned components, the balance being Fe (iron) and incidental impurities.

The steel sheet of the present invention can contain, as optional elements, one or two or more selected from the following (A), (B), (C), and (D) in accordance with desired properties:

(A) one or two selected from, by mass%, Ti: 0.2% or less and Nb: 0.2% or less;
(B) one or two or more selected from, by mass%, Cr: 1.0% or less, Mo: 1.0% or less, and V: 1.0% or less;
(C) B: 0.005% or less by mass%; and
(D) one or two selected from, by mass%, Ca: 0.005% or less and Sb: 0.03% or less.

One or Two Selected from Ti: 0.2% or Less and Nb: 0.2% or Less

Ti and Nb are added for the purpose of increasing the strength of steel by precipitation strengthening. To ensure a desired strength, when Ti and Nb are contained, the Ti content and the Nb content are each preferably 0.01% or more. When each of the elements Ti and Nb is contained in an amount of more than 0.2%, not only the effect is saturated, but also the formability is deteriorated. Thus, when Ti and Nb are contained, each of the Ti content and the Nb content is 0.2% or less. Each of the Ti content and the Nb content is preferably 0.03% or more. Each of the Ti content and the Nb content is preferably 0.1% or less.

One or Two or More Selected From Cr: 1.0% or Less, Mo: 1.0% or Less, and V: 1.0% or Less

Cr, Mo, and V are elements effective in increasing hardenability to strengthen steel. When the Cr content is 0.05% or more, the effects are obtained. When the Mo content is 0.05% or more, the effects are obtained. When the V content is 0.01% or more, the effects are obtained. Thus, it is preferable that the Cr content be 0.05% or more, the Mo content be 0.05% or more, and the V content be 0.01% or more. The Cr content is preferably 0.1% or more. The Mo content is preferably 0.1% or more. The V content is preferably 0.02% or more.

However, when each of the Cr content, the Mo content, and the V content is more than 1.0%, the formability decreases. Thus, when Cr, Mo, and V are contained, each of the Cr content, the Mo content, and the V content is 1.0% or less. The Cr content is preferably 0.5% or less. The Mo content is preferably 0.5% or less. The V content is preferably 0.5% or less.

B: 0.005% or Less

B is an element that has the effect of improving hardenability and can be contained as necessary. This effect can be obtained at a B content of 0.0003% or more. Thus, the B content is preferably 0.0003% or more. The B content is more preferably 0.001% or more.

However, a B content of more than 0.005% results in the saturation of the effect, increasing the cost. Thus, when B is contained, the B content is 0.005% or less. The B content is preferably 0.003% or less.

One or Two Selected from Ca: 0.005% or Less and Sb: 0.03% or Less

Ca is an element effective for spheroidizing sulfides to decrease the adverse effect of sulfides on formability, and can be contained as necessary. This effect is obtained at a Ca content of 0.001% or more. A Ca content of more than 0.005%, however, results in the increase of inclusions and the like, causing surface and internal defects and the like. Thus, when Ca is contained, the Ca content is 0.005% or less.

Sb has the effect of inhibiting a decarburized layer in a surface layer portion of the steel sheet, thereby improving the fatigue property. To provide the effect, the Sb content is preferably 0.003% or more. An Sb content of more than 0.03%, however, leads to an increase in rolling load during production of the steel sheet, thereby possibly decreasing productivity. Thus, when Sb is contained, the Sb content is 0.03% or less.

The Sb content is preferably 0.005% or more. The Sb content is preferably 0.02% or less.

When any of the above optional elements is contained in an amount less than the aforementioned preferred lower limit, the element is considered to be contained as an incidental impurity.

The steel sheet microstructure of the galvanized steel sheet of the present invention will be described below.

Area Fraction of Martensite: 30% or More and 80% or Less

Martensite acts to increase the strength of steel. To obtain a desired strength, the area fraction of martensite needs to be 30% or more. An area fraction of martensite of more than 80% results in a decrease in formability. Thus, the area fraction of martensite is 30% or more and 80% or less. Martensite is preferably 40% or more. Martensite is preferably 70% or less.

Average Crystal Grain Size of Martensite: 10 um or Less

Refining martensite is effective in improving local deformation properties. This effect can be obtained at an average crystal grain size of martensite of 10 $\mu$m. or less. Thus, the average crystal grain size of martensite is 10 $\mu$m or less. The average crystal grain size of the martensite is preferably 7 um or less. The lower limit is not particularly limited, but the average crystal grain size of martensite is preferably 1 $\mu$m or more, more preferably 2 $\mu$m or more.
In the present invention, martensite may be one of fresh martensite that is as-quenched martensite and tempered martensite subjected to tempering, and there is no problem even if both are mixed.

Area Fraction of Ferrite: 20% or More and 70% or Less

To ensure good uniform elongation properties, the total area fraction of ferrite needs to be 20% or more. An area fraction of ferrite of more than 70% is less likely to obtain desired strength. Thus, the area fraction of ferrite is 20% or more and 70% or less. Ferrite is preferably 30% or more. Ferrite is preferably 60% or less. Note that the term "ferrite" as used herein refers to the entire ferrite (all ferrites) including high-Mn ferrite and low-Mn ferrite described below. The entire ferrite includes ferrite that does not correspond to either high-Mn ferrite or low-Mn ferrite.

Proportion of Area Fraction of Low-Mn Ferrite Based on Area Fraction of Entire Ferrite: 20% or More and 80% or Less

Proportion of Area Fraction of High-Mn Ferrite Based on Area Fraction of Entire Ferrite: 20% or More and 80% or Less

In the present invention, low-Mn ferrite refers to ferrite in which the Mn concentration is 0.80 to 0.95 times the Mn concentration (Mn content) in the steel sheet.
In the present invention, low-Mn ferrite refers to ferrite in which the Mn concentration is 1.05 to 2.5 times the Mn concentration (Mn content) in the steel sheet.
When low-Mn ferrite and high-Mn ferrite are mixed in a proportion range of 20% to 80% in the entire ferrite, the uniform deformation properties and the local deformation properties are both improved. When the proportion of low-Mn ferrite or high-Mn ferrite in the entire ferrite is less than 20% or is more than 80%, the above-mentioned effect cannot be obtained. For this reason, each of the proportion of low-Mn ferrite and the proportion of high-Mn ferrite in the entire ferrite is 20% to 80% in terms of area fraction. Preferably, this proportion is 30% or more. Preferably, this proportion is 70% or less.
A method for measuring a microstructure (the microstructure of a cross section of a steel sheet) is as follows: A 1 mass% nital solution is used to expose a microstructure. A 1/4 position of a sheet thickness (a position at a depth corresponding to 1/4 of the sheet thickness from a surface) is observed with a scanning electron microscope (SEM) at a magnification of $\times 3{,}000$. The area fractions of martensite, ferrite, pearlite, and bainite are quantified from the photographed microstructure.
Regarding another microstructure, the volume fraction of retained austenite is determined by polishing the steel sheet to a face at the 1/4 position of the sheet thickness in the thickness direction and using the X-ray diffraction intensity on the face at the 1/4 position of the sheet thickness. Co-K$\alpha$ radiation is used as an incident X-ray. Intensity ratios are calculated for all combinations of the integrated peak intensities of the {111}, {200}, {220}, and {311} planes of the retained austenite phase and the {110}, {200}, and {211} planes of the ferrite phase. The average value of these is defined as the volume fraction (area fraction) (%) of retained austenite.
The average crystal grain size of martensite is determined as follows: Observation is performed at a magnification of $\times 3{,}000$ with the SEM. Photographs of the microstructure taken are used. The area and number of martensite in the field of view of 5,000 to 10,000 $\mu m^2$ are determined. The area is divided by the number to determine an area per martensite crystal grain. The martensite is approximated as a square, and one side of the square is defined as the average crystal grain size.
The proportion of low-Mn ferrite and high-Mn ferrite in the total ferrite is determined as described below.
First, a sample with a cross section of the sheet thickness parallel to the rolling direction of the steel sheet as an observation surface is collected. The observation surface is finished to a mirror surface by mechanical polishing. Thereafter, the distribution of the Mn concentration in the field of view of 5,000 to 10,000 $\mu m^2$ is measured at intervals of 0.1 um by FE-EPMA analysis in the range of 1/8 to 3/8 positions of the sheet thickness. Measurement points corresponding to the positions of ferrite are extracted from them. Furthermore, measurement points at which the concentration is 0.80 or more times and 0.95 or less times, or 1.05 or more times and 2.5 or less times the Mn concentration (Mn content) in the steel are extracted. Then, the proportions of the number of measurement points of 0.80 or more times and 0.95 or less times and the number of measurement points of 1.05 or more times and 2.5 or less times of the Mn concentration in the steel with respect to the number of measurement points in the entire ferrite are determined as the proportions of the area fraction of low-Mn ferrite and the area fraction of high-Mn ferrite in the area fraction of the entire ferrite, respectively.

A method for identifying the position of ferrite in a portion subjected to the FE-EPMA analysis of Mn is not particularly limited, but the position can be identified by, for example, measuring a C concentration distribution by FE-EPMA.

Typically, in the measurement of the C concentration by the FE-EPMA analysis, it is difficult to perform quantitative evaluation due to the influence of contamination (carbon contamination) by hydrocarbons accumulated at the analysis portion on the sample surface at the time of measurement. However, a method disclosed in "Tetsu to Hagane (Iron and Steel), 103 (2017), p. 622" enables quantitative analysis of C concentration while avoiding carbon contamination. Almost no C can be dissolved in ferrite; hence, a portion having a low C concentration (a portion having a C concentration of 0.15 mass% or less) is ferrite.

In the present invention, as long as the above-mentioned phase constitution is satisfied, a phase such as bainite, retained austenite or pearlite may be contained in an area fraction of 10% or less as a phase other than the above-mentioned phases.

Amount of Diffusible Hydrogen in Steel: 0.30 mass.ppm or Less

In the steel sheet, the amount of diffusible hydrogen in steel measured by a method described below is 0.30 mass.ppm or less. The diffusible hydrogen in steel deteriorates hydrogen embrittlement resistance. Furthermore, an excessive amount of diffusible hydrogen in steel of more than 0.30 mass.ppm results in lower ductility, and in particular, the local deformation properties deteriorate greatly. Thus, in the present invention, the amount of diffusible hydrogen in steel is 0.30 mass.ppm or less, preferably 0.20 mass.ppm or less. The lower limit is not particularly limited, but a smaller amount thereof is more preferred.

The amount of diffusible hydrogen in steel is measured by the following method. First, a test specimen of $5 \times 30$ mm is cut out from the coated steel sheet. The coating of the test specimen is removed with a router, and the test specimen is placed in a quartz tube. The atmosphere in the quartz tube is replaced with Ar. Then the quartz tube is heated at 200 °C/hr. The amount of hydrogen generated up to 250°C is measured with a gas chromatograph. In this manner, the amount of hydrogen released is measured by temperature-programmed analysis method. The cumulative value of the amount of hydrogen detected in a temperature range of room temperature to lower than 210°C is defined as the amount of diffusible hydrogen. The room temperature may be 0°C to 50°C.

The amount of hydrogen is preferably measured after the completion of production of the steel sheet. The amount of hydrogen is more preferably measured within one week after the completion of production of the steel sheet.

Surface Soft Layer

The galvanized steel sheet (hereinafter also referred to as a base steel sheet) according to an embodiment of the present invention includes a surface soft layer (located below the zinc coating (underlying layer)) on a surface of the base steel sheet. The surface soft layer contributes to inhibition of bending crack propagation during press forming and a vehicle collision, thus further improving bending fracture resistance properties. The surface soft layer refers to a decarburized layer and is a surface layer region having a Vickers hardness of 85% or less of the Vickers hardness of a cross section at a 1/4 position of the sheet thickness.

Here, the surface soft layer is formed in a region extending from a surface of the base steel sheet to a position 200 um or less from the surface in the thickness direction. The thickness of the surface soft layer is preferably 150 um or less, more preferably 120 um or less, and most preferably 100 um or less. The lower limit of the thickness of the surface soft layer is not specified, but a region where the surface soft layer is formed preferably extends from the surface of the base steel sheet to a position 7 um or more from the surface in the thickness direction.

The Vickers hardness is measured in accordance with JIS Z 2244-1 (2020) with a load of 10 gf.

Nanohardness of Surface Soft Layer

When Nanohardness Is Measured at 300 or More Points in 50 $\mu$m $\times$ 50 um Region of Sheet Face at each of 1/4 Position and 1/2 Position of Depth of Surface Soft Layer in Thickness Direction from Surface of Base Steel Sheet, Proportion of Number of Measurement Points Exhibiting Nanohardness of 7.0 GPa or More on Sheet Face at 1/4 Position of Depth of Surface Soft Layer in Thickness Direction from Surface of Base Steel Sheet Is 0.10 or Less Based on Total Number of Measurement Points At 1/4 Position of Depth in Thickness Direction of Surface Soft Layer

In the present invention, in order to obtain an excellent bendability at the time of press forming and excellent bending fracture properties at the time of a collision, when nanohardness is measured at 300 or more points in a 50 um × 50 um region of a sheet face at the 1/4 position of the depth of the surface soft layer in the thickness direction from the surface of the base steel sheet, the proportion of the number of measurement points exhibiting a nanohardness of 7.0 GPa or more on the sheet face at the 1/4 position of the depth of the surface soft layer in the thickness direction from the surface of the base steel sheet is preferably 0.10 or less based on the total number of measurement points at the 1/4 position of the depth of the surface soft layer in the thickness direction. When the proportion of a nanohardness of 7.0 GPa or more is 0.10 or less, it indicates small proportions of a hard microstructure (for example, martensite), inclusions, and the like. The generation and connection of voids and the propagation of cracks due to the hard microstructure (for example, martensite) and inclusions during press forming and a collision can be further inhibited, thereby obtaining excellent R/t and SFmax.

The proportion of the sheet face, located at the 1/4 position of the depth of the surface soft layer in the thickness direction from the surface of the base steel sheet, having a nanohardness of 7.0 GPa or more is preferably 0.09 or less, more preferably 0.08 or less, based on the total number of measurement points. The lower limit is not particularly limited, but may be 0.01 or more.

Standard Deviation σ of Nanohardness on Sheet Face at 1/4 Position of Depth of Surface Soft Layer in Thickness Direction from Surface of Steel Sheet is 1.8 GPa or less, and Standard Deviation σ of Nanohardness of Sheet Face at 1/2 Position of Depth of Surface Soft Layer in Thickness Direction from Surface of Steel Sheet is 2.2 GPa or Less

In the present invention, in order to obtain excellent bendability during press forming and excellent bending fracture properties during a collision, it is preferable that the standard deviation σ of the nanohardness on the sheet face at the 1/4 position of the depth of the surface soft layer in the thickness direction from the surface of the steel sheet be 1.8 GPa or less, and the standard deviation σ of the nanohardness of the sheet face at the 1/2 position of the depth of the surface soft layer in the thickness direction from the surface of the steel sheet be 2.2 GPa or less. In the case where the standard deviation σ of the nanohardness on the sheet face at the 1/4 position of the depth of the surface soft layer in the thickness direction from the surface of the steel sheet is 1.8 GPa or less and where the standard deviation σ of the nanohardness of the sheet face at the 1/2 position of the depth of the surface soft layer in the thickness direction from the surface of the steel sheet is 2.2 GPa or less, it indicates a small difference in the hardness of the microstructure in a microregion. The generation and connection of voids and the propagation of cracks during press forming and a collision can be further inhibited, thereby obtaining excellent R/t and SFmax.

The standard deviation σ of the nanohardness on the sheet face at the 1/4 position of the depth of the surface soft layer in the thickness direction from the surface of the steel sheet is more preferably in the range of 1.7 GPa or less. The standard deviation σ of the nanohardness on the sheet face at the 1/4 position of the depth of the surface soft layer in the thickness direction from the surface of the steel sheet is still more preferably 1.6 GPa or less. The lower limit is not particularly limited, but the standard deviation σ of the nanohardness of on the sheet face at the 1/4 position of the depth of the surface soft layer in the thickness direction from the surface of the steel sheet may be 0.1 GPa or more or may be 0.3 GPa or more.

The standard deviation σ of the nanohardness of the sheet face at the 1/2 position of the depth of the surface soft layer in the thickness direction from the surface of the steel sheet is more preferably in the range of 2.1 GPa or less. The standard deviation σ of the nanohardness of the sheet face at the 1/2 position of the depth of the surface soft layer in the thickness direction from the surface of the steel sheet is still more preferably 2.0 GPa or less. The lower limit is not particularly limited, but the standard deviation σ of the nanohardness of the sheet face at the 1/2 position of the depth of the surface soft layer in the thickness direction from the surface of the base steel sheet may be 0.1 GPa or more or may be 0.3 GPa or more.

Here, the nanohardness of the sheet face at each of the 1/4 position and the 1/2 position of the depth in the thickness direction is hardness measured by the following method.

First, the coated layer is peeled off. Thereafter, mechanical polishing is performed from the surface of the steel sheet (base steel sheet) to the 1/4 position - 5 um of the depth of the surface soft layer in the thickness direction. Buffing is performed with diamond and alumina from the surface of the base steel sheet to the 1/4 position of the depth of the surface soft layer in the thickness direction. Furthermore, colloidal silica polishing is performed. The nanohardness is measured with a Hysitron Tribo-950 using a Berkovich-shaped diamond indenter under the conditions of load: 500 μN, measurement area: 50 μm × 50 μm, and indentation intervals: 2 um.

Mechanical polishing is performed to the 1/2 position of the depth of the surface soft layer in the thickness direction. Then buffing is performed with diamond and alumina. Furthermore, colloidal silica polishing is performed. The nanohardness is measured with the Hysitron Tribo-950 using the Berkovich-shaped diamond indenter under the conditions of load: 500 $\mu$N, measurement area: 50 $\mu$m $\times$ 50 $\mu$m, and indentation intervals: 2 $\mu$m.

Coated Metal Layer (First Coated Layer)

The galvanized steel sheet according to an embodiment of the present invention preferably includes a coated metal layer (first coated layer, pre-coated layer) (note that the coated metal layer (first coated layer) excludes the galvanized layers of a hot-dip galvanized layer and a hot-dip galvannealed layer) on one or both surfaces of the steel sheet (base steel sheet). The coated metal layer is preferably an electroplated metal layer. In the following description, an electroplated metal layer will be described as an example.

When the electroplated metal layer is formed on a surface of the steel sheet, the electroplated metal layer serving as the outermost surface layer contributes to the inhibition of the occurrence of bending cracking during press forming and a vehicle collision, thus further improving the bending fracture resistance properties.

In the present invention, the dew point is higher than -20°C; hence, the thickness of the soft layer can be increased to achieve significantly excellent axial crushing characteristics. In this regard, in the present invention, since the coated metal layer is disposed, the axial crushing characteristics equivalent to those obtained at a thick soft layer are obtained even at a dew point of -20°C or lower and a thin soft layer.

The metal species of the electroplated metal layer may be any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, but is preferably Fe. In the following, an Fe-based electroplated layer will be described as an example, but the following conditions for Fe can be similarly used for other metal species.

The coating weight of the Fe-based electroplated layer is more than 0 g/m$^2$, preferably 2.0 g/m$^2$ or more. The upper limit of the coating weight of the Fe-based electroplated layer per side is not particularly limited. From the viewpoint of cost, the coating weight of the Fe-based electroplated layer per side is preferably 60 g/m$^2$ or less. The coating weight of the Fe-based electroplated layer is preferably 50 g/m$^2$ or less, more preferably 40 g/m$^2$ or less, and even more preferably 30 g/m$^2$ or less.

The coating weight of the Fe-based electroplated layer is measured as follows: A sample size of 10 $\times$ 15 mm was taken from the Fe-based electroplated steel sheet and embedded in a resin to prepare an embedded cross-section sample. Freely-selected three portions on the cross section are observed using a scanning electron microscope (SEM) at an acceleration voltage of 15 kV and a magnification of $\times$2,000 to $\times$10,000 in accordance with the thickness of the Fe-based electroplated layer. The average thickness of the three fields of view is multiplied by the specific gravity of iron to convert it into the coating weight of the Fe-based electroplated layer per side.

As the Fe-based electroplated layer, in addition to pure Fe, an alloy plated layer of an Fe-B alloy, an Fe-C alloy, an Fe-P alloy, an Fe-N alloy, an Fe-O alloy, an Fe-Ni alloy, an Fe-Mn alloy, an Fe-Mo alloy, an Fe-W alloy, or the like can be used. The chemical composition of the Fe-based electroplated layer is not particularly limited. Preferably, the chemical composition contains one or two or more elements selected from the group consisting of B, C, P, N, O, Ni, Mn, Mo, Zn, W, Pb, Sn, Cr, V, and Co in a total amount of 10 mass% or less, with the balance being Fe and incidental impurities. When the total amount of elements other than Fe is 10 mass% or less, a decrease in electrolysis efficiency is prevented, and the Fe-based electroplated layer can be formed at low cost. In the case of the Fe-C alloy, the C content is preferably 0.08 mass% or less.

Galvanized Layer (Second Coated Layer)

Coating weight per side is 20 to 120 g/m$^2$

The galvanized layer preferably has a coating weight of 20 g/m$^2$ or more per side. The coating weight of the galvanized layer per side is preferably 120 g/m$^2$ or less. A coating weight of less than 20 g/m$^2$ may result in a difficulty in ensuring corrosion resistance. Thus, the coating weight of the galvanized layer per side is preferably 20 g/m$^2$ or more. At more than 120 g/m$^2$, the exfoliation resistance may deteriorate. Thus, the coating weight of the galvanized layer per side is preferably 120 g/m$^2$ or less.

The Fe content of the galvanized layer (second coated layer) is 8 to 15 mass%

The galvanized layer preferably contains 8 mass% or more of Fe. The galvanized layer preferably contains 15 mass% or less of Fe. When the Fe content in the galvanized layer is 8 mass% or more, it can be said that a sufficient Fe-Zn alloy layer is obtained. The Fe content is preferably 9% or more, more preferably 10% or more. An Fe content of more than 15% may result in a deterioration in coating adhesion to cause a problem called powdering during pressing. Thus, the Fe content is preferably 15% or less. The Fe content is more preferably 14% or less, even more preferably 13% or less.

The thickness of the galvanized steel sheet of the present invention is not particularly limited, but is preferably 0.8 mm or more, more preferably 1.0 mm or more. The sheet thickness is preferably 3.2 mm or less, more preferably 2.6 mm or less.

[Method for Manufacturing Galvanized Steel Sheet]

A method for manufacturing a galvanized steel sheet according to the present invention will be described below.
A steel having the above-mentioned chemical composition is prepared in a converter or the like, and cast into a slab by a continuous casting method or the like. The slab is subjected to hot rolling to produce a hot rolled steel sheet. The hot rolled steel sheet is subjected to pickling and cold rolling to produce a cold rolled steel sheet. The cold rolled steel sheet is subjected to annealing and coating treatment in a continuous galvanizing line (CGL).
Specifically, a method for manufacturing a galvanized steel sheet of the present invention includes a hot rolling step of hot-rolling a steel slab having the chemical composition described above to provide a hot rolled steel sheet having a microstructure having a total area fraction of bainite and martensite of 80% or more; a pickling step of pickling the resulting hot rolled steel sheet; after the pickling step, a cold rolling step of performing cold rolling at a cold rolling reduction ratio of 30% or more and 80% or less to provide a cold rolled steel sheet; a continuous annealing step of subjecting the cold rolled steel sheet to continuous annealing; after the continuous annealing step, a first cooling step of cooling the resulting cold rolled steel sheet to 550°C or lower at an average cooling rate of 3 °C/s or more and 50 °C/s or less in a temperature range of 750°C to 550°C; after the first cooling step, a galvanizing step of performing galvanizing treatment; a second cooling step of cooling a coated steel sheet after the galvanizing step to 100°C or lower; and a reheating step of holding the coated steel sheet after the second cooling step in a temperature range of 150°C to 450°C for 10 seconds or more and 72 hours or less, in which in the continuous annealing step, an average heating rate from 500°C to 700°C is 3 °C/s or more, D in the following formula (1) satisfies $1.0 \times 10^{-6}$ or more and $8.0 \times 10^{-6}$ or less at 780°C or higher and lower than 940°C, heating is performed to a maximum arrival temperature of 780°C or higher and lower than or equal to (an Ac$_3$ point - 20°C), and a hydrogen concentration in an annealing furnace in a temperature range of 780°C or higher is 1 vol% or more and 20 vol% or less,

[Math. 2]

$$D= \sum_{i=0}^{15} ((0.486 \times \exp(-33200/(T_i + 268)) \times t_i))^{1/2}$$

$\cdots$ formula (1)

where in formula (1),

$t_i$: a residence time (s) in a temperature range of $T_i$°C or higher and lower than $T_i$ + 10°C,
$T_i$ (°C): 780 + i × 10 (i: an integer of 0 to 15), and
the residence time $t_i$ (s) in a temperature range higher than the maximum arrival temperature is 0 seconds.

Each condition will be explained below. In the following description, the temperature refers to the surface temperature of the steel sheet unless otherwise specified. The surface temperature of the steel sheet can be measured with a radiation thermometer or the like. The average cooling rate is defined as (surface temperature before cooling - surface temperature after cooling)/cooling time. The average cooling rate is defined as (surface temperature before cooling - surface temperature after cooling)/cooling time. The average heating rate is defined as (surface temperature after heating - surface temperature before heating)/heating time.

Production of Steel Slab

A preparation method for the production of the steel slab is not particularly limited. Various known preparation methods may be used, including, for example, a method using a converter and a method using an electric arc furnace. Secondary refining may be performed with a vacuum degassing furnace. Thereafter, preferably, the slab (steel material) may be produced by a known continuous casting method from the viewpoint of productivity and quality. The slab may be produced by a known casting method, such as an ingot making-blooming method or a thin slab continuous casting method.

Hot Rolling

Microstructure of Hot Rolled Steel Sheet: Total Area Fraction of Bainite and Martensite Is 80% or More

In the present invention, hot rolling is performed in such a manner that the total area fraction of bainite and martensite in the microstructure of the resulting hot rolled steel sheet is 80% or more.

In the hot rolled microstructure, when ferrite, pearlite, or the like is present as a phase other than bainite and martensite, the distribution of the Mn concentration at the hot rolling stage is likely to be nonuniform. When such a hot rolled steel sheet is used, austenitization occurs preferentially from a portion having a high Mn concentration in the final annealing step to increase the grain size of martensite. Furthermore, excessive distribution of Mn during annealing results in a failure to obtain a desired amount of high-Mn ferrite. Thus, in the microstructure of the hot rolled steel sheet, the total area fraction of bainite and martensite is 80% or more.

The hot rolling conditions are not particularly limited as long as the total area fraction of bainite and martensite in the microstructure of the hot rolled steel sheet is 80% or more. For example, the following conditions can be used as the slab heating temperature, the finish rolling temperature, the average cooling rate in the temperature range of 800°C to 600°C, and the coiling temperature.

Slab Heating

The steel slab can be hot-rolled by, for example, a method in which the slab is heated and then rolled, a method in which the slab is directly rolled after continuous casting without heating, a method in which the slab is subjected to a short-term heat treatment after continuous casting and then rolled. The slab heating temperature may be 1,100°C or higher. The slab heating temperature may be 1,320°C or lower.

Finish Rolling Temperature: 800°C or higher

Average Cooling Rate in Temperature Range of 800°C to 600°C: 30 °C/s or More

When the finish rolling temperature is lower than 800°C or the average cooling rate in the temperature range of 800°C to 600°C is less than 30 °C/s, excessive ferrite is generated during rolling or cooling. Thus, the microstructure of the hot rolled sheet is less likely to have a total area fraction of bainite and martensite of 80% or more. Thus, it is preferable that the finish rolling temperature be 800°C or higher, and the average cooling rate in the temperature range of 800°C to 600°C be 30 °C/s or more. The upper limit is preferably 200 °C/s or less from the viewpoint of equipment costs.

Coiling Temperature: 300°C or Higher and 550°C or Lower

A coiling temperature of lower than 300°C results in a deterioration in the shape of the hot rolled steel sheet, thereby affecting threading in the subsequent rolling and annealing. Thus, the coiling temperature is preferably 300°C or higher.

A coiling temperature of more than 550°C results in the formation of ferrite and pearlite after coiling. Thus, the microstructure of the hot rolled sheet is less likely to have a total area fraction of bainite and martensite of 80% or more. Therefore, the coiling temperature is preferably 550°C or less.

Pickling

The resulting hot rolled steel sheet is subjected to pickling. The pickling conditions are not particularly limited.

Cold Rolling

Cold Rolling Reduction Ratio: 30% or More and 80% or Less

The cold rolling conditions require a cold reduction (cumulative rolling reduction ratio) of 30% or more in order to form recrystallized ferrite during annealing to ensure workability. A cold rolling reduction ratio of more than 80% results in an excessive increase in rolling load, thereby hindering productivity. Thus, the cold rolling reduction ratio is 30% or more and 80% or less. The cold rolling reduction ratio is preferably 40% or more. The cold rolling reduction ratio is preferably 70% or less.

(Metal Coating (Metal Electroplating, First Coating) Step)

In an embodiment of the present invention, a first coating step may be included in which one or both sides of the steel sheet after the cold rolling step and before the continuous annealing step are subjected to metal coating to form a coated metal layer (first coated layer).

For example, a surface of the cold rolled steel sheet obtained as described above may be subjected to metal electroplating treatment to produce a metal electroplated steel sheet before annealing, the metal electroplated steel sheet having an electroplated metal layer before annealing, the electroplated metal layer being formed on at least one side. The term "metal coating" used here does not include galvanization (second coating).

A method of metal electroplating treatment is not particularly limited. As described above, the coated metal layer formed on the steel sheet (base steel sheet) is preferably an electroplated metal layer. Thus, a metal electroplating treatment is preferably performed.

For example, in the case of an Fe-based electroplating bath, for example, a sulfuric acid bath, a hydrochloric acid bath, or a mixture of both can be used. For example, in the case of an Fe-based electroplating bath, for example, a sulfuric acid bath, a hydrochloric acid bath, or a mixture of both can be used. The coating weight of the electroplated metal layer before annealing can be adjusted by, for example, the energization time. The term "metal electroplated steel sheet before annealing" indicates that the electroplated metal layer has not been subjected to a continuous annealing step, and does not exclude an embodiment in which a hot rolled steel sheet before metal electroplating treatment, a pickled sheet after hot rolling, or a cold rolled steel sheet has been annealed in advance.

The metal species of the electroplated layer may be any of Cr, Mn, Fe, Co, Ni, Cu, Ga, Ge, As, Ru, Rh, Pd, Ag, Cd, In, Sn, Sb, Os, Ir, Rt, Au, Hg, Ti, Pb, and Bi, but is preferably Fe. Thus, a method for producing an Fe-based electroplating will be described below.

The Fe ion content in the Fe-based electroplating bath before the start of energization is preferably 0.5 mol/L or more in terms of $Fe^{2+}$. When the Fe ion content of the Fe-based electroplating bath is 0.5 mol/L or more in terms of $Fe^{2+}$, a sufficient Fe coating weight can be obtained. To obtain a sufficient Fe coating weight, the Fe ion content of the Fe-based electroplating bath before the start of energization is preferably 2.0 mol/L or less.

The Fe-based electroplating bath may also contain Fe ions and at least one element selected from the group consisting of B, C, P, N, O, Ni, Mn, Mo, Zn, W, Pb, Sn, Cr, V, and Co. The total amount of these elements contained in the Fe-based electroplating bath is preferably adjusted in such a manner that the total amount of these elements contained in the Fe-based electroplated layer before annealing is 10 mass% or less. Metal elements may be contained as metal ions, and non-metal elements may be contained as part of boric acid, phosphoric acid, nitric acid, organic acids, and the like. The iron sulfate plating solution may also contain a conductivity aid such as sodium sulfate or potassium sulfate, a chelating agent, and a pH buffer.

Other conditions for the Fe-based electroplating bath are not particularly limited. The temperature of the Fe-based electroplating solution is preferably 30°C or higher for constant temperature retention. The pH of the Fe-based electroplating bath is not particularly specified, but is preferably 1.0 or more from the viewpoint of preventing a decrease in current efficiency due to hydrogen generation. In consideration of the electrical conductivity of the Fe-based electroplating bath, the pH is preferably 3.0 or less. The current density is preferably 10 $A/dm^2$ or more from the viewpoint of productivity, and is preferably 150 $A/dm^2$ or less from the viewpoint of ease of control of the coating weight of the Fe-based electroplated layer. The threading speed is preferably 5 mpm or more from the viewpoint of productivity, and is preferably 150 mpm or less from the viewpoint of stable control of coating weight.

As treatments prior to the Fe-based electroplating treatment, degreasing treatment and water washing can be performed to clean the surface of the steel sheet, and pickling treatment and water washing can also be performed to activate the surface of the steel sheet. Subsequent to these pretreatments, the Fe-based electroplating treatment is performed. The methods of the degreasing treatment and the water washing are not limited, and conventional methods can be used. Various acids, such as sulfuric acid, hydrochloric acid, nitric acid, and mixtures of these acids, can be used in the pickling treatment. Among these, sulfuric acid, hydrochloric acid, or a mixture of these is preferred. The acid concentration is not particularly specified, but is preferably about 1 to 20 mass% in consideration of the ability to remove an oxide film and the prevention of rough skin (surface defects) due to over pickling. The pickling treatment solution may also contain, for example, a defoamer, a pickling promoter, or a pickling inhibitor.

Continuous Annealing

Average Heating Rate from 500°C to 700°C: 3 °C/s or More

After the above cold rolling, the resulting cold rolled steel sheet is subjected to continuous annealing.

In continuous annealing, an average heating rate of less than 3 °C/s at 500°C to 700°C results in excessive recrystallization and grain growth of ferrite to lead to coarsening of the microstructure, thereby failing to achieve martensite having an average crystal grain size of 10 $\mu$m or less.

Thus, the average heating rate from 500°C to 700°C is 3 °C/s or more. The average heating rate is preferably 5 °C/s or more. The upper limit is not particularly limited. The average heating rate is preferably 100 °C/s or less, more preferably 50 °C/s or less.

Maximum Arrival Temperature: 780°C or Higher and Lower than or Equal to (Ac$_3$ Point - 20°C)

When the maximum arrival temperature in continuous annealing is lower than 780°C, austenite is insufficiently formed to fail to achieve a desired amount of martensite after annealing. When the temperature is higher than (the Ac3 point - 20°C), austenite is excessively formed to fail to achieve a desired amount of ferrite. Thus, the maximum arrival temperature is 780°C or higher and (Ac$_3$ point - 20°C) or lower.

Here, the Ac$_3$ point is determined by the following formula (3).

Ac$_3$ (°C) = 910 - 203 × [%C]$^{1/2}$ - 15.2 × [%Ni] + 44.7 × [%Si] + 104 × [%V] + 31.5 × [oMo]          formula (3)

In formula (3), [%C], [%Ni], [%Si], [%V], and [%Mo] refer to the C content, the Ni content, the Si content, the V content, and the Mo content (mass%), respectively, of the steel sheet, and an element that is not contained is zero (0 mass%).

D: $1.0 \times 10^{-6}$ or More and $8.0 \times 10^{-6}$ or Less

[Math. 3]

$$D = \sum_{i=0}^{15} ((0.486 \times \exp(-33200/(T_i + 268)) \times t_i))^{1/2}$$

$\cdots$ formula (1)

In formula (1),

$t_i$: a residence time (s) in a temperature range of $T_i$°C or higher and lower than $T_i$ + 10°C,
$T_i$ (°C): 780 + i × 10 (i: an integer of 0 to 15), and
the residence time $t_i$ (s) in a temperature range higher than the maximum arrival temperature is 0 seconds.

When D represented by formula (1) is less than $1.0 \times 10^{-6}$, Mn is insufficiently concentrated from ferrite to austenite during dual-phase region annealing, thereby failing to obtain low-Mn ferrite and high-Mn ferrite with desired Mn concentrations.

When D is more than $8.0 \times 10^{-6}$, Mn is excessively concentrated in austenite during dual-phase region annealing, resulting in insufficient formation of high-Mn ferrite. Thus, D is $1.0 \times 10^{-6}$ or more and $8.0 \times 10^{-6}$ or less. D is preferably $1.5 \times 10^{-6}$ or more. D is preferably $6.0 \times 10^{-6}$ or less.

Hydrogen Concentration in Annealing Furnace in Temperature Range of 780°C or Higher: 1 vol% or More and 20 vol% or Less

When the hydrogen concentration in the annealing furnace in the temperature range of 780°C or higher is less than 1 vol%, the coatability deteriorates to cause bare spots. When the hydrogen concentration is more than 20 vol%, the diffusible hydrogen concentration in steel increases, causing a deterioration in hydrogen embrittlement resistance and a decrease in the ductility of steel. Thus, the hydrogen concentration in the annealing furnace in the temperature range of 780°C or higher is 1 vol% or more and 20 vol% or less. The hydrogen concentration is preferably 3 vol% or more. The hydrogen concentration is preferably 15 vol% or less.

Dew Point of Atmosphere in Continuous Annealing Step (Annealing Atmosphere): -30°C or Higher

In an embodiment of the present invention, the dew point of the atmosphere in the continuous annealing step (annealing atmosphere) is preferably -30°C or higher. When annealing is performed by setting the dew point of the annealing atmosphere in the continuous annealing step to - 30°C or higher, the decarburization reaction can be promoted to form the surface soft layer more deeply. The dew point of the annealing atmosphere in the continuous annealing step is more preferably -25°C or higher, even more preferably above -20°C, still more preferably -15°C or higher, and still even more preferably -5°C or higher. The upper limit of the dew point of the annealing atmosphere in the continuous annealing step is not particularly determined. To suitably prevent oxidation of the surface of the Fe-based electroplated layer and to improve coating adhesion when a galvanized layer is provided, the dew point of the annealing atmosphere in the continuous annealing step is preferably 30°C or lower.

First Cooling

Average Cooling Rate After Continuous Annealing: 3 °C/s or More and 50 °C/s or Less in Temperature Range of 750°C to 550°C

The cold-rolled annealed steel sheet obtained after the continuous annealing is subjected to cooling treatment. Here, the high-Mn ferrite is produced by transformation from austenite in which Mn is concentrated during dual-phase region annealing. When the average cooling rate in the temperature range of 750°C to 550°C where ferrite is formed during cooling is more than 50 °C/s, the ferrite transformation is inhibited to fail to obtain high-Mn ferrite. A cooling rate of less than 3 °C/s results in the formation of pearlite during cooling to fail to obtain a desired amount of martensite. Thus, the average cooling rate in the temperature range of 750°C to 550°C after annealing is 3 °C/s or more and 50 °C/s or less. The average cooling rate in the temperature range of 750°C to 550°C after annealing is preferably 5 °C/s or more. The average cooling rate in the temperature range of 750°C to 550°C after annealing is preferably 30 °C/s or less.

The cooling stop temperature in the cooling (first cooling) after annealing is 550°C or lower, because a cooling stop temperature of higher than 550°C results in excessive formation of pearlite to fail to obtain a desired microstructure.

Galvanizing Treatment

In the present invention, after the first cooling step, galvanizing treatment is performed. As the galvanizing treatment, hot-dip galvanizing treatment can be used. The conditions for the hot-dip galvanizing treatment are not particularly limited.

Alloying Treatment After Galvanizing Treatment

Temperature Range: 480°C to 560°C, Treatment Time: 5 to 60 seconds

After the galvanizing treatment, an alloying treatment may be performed.

When alloying treatment is performed after galvanization, alloying of the coating does not proceed sufficiently at an alloying treatment temperature of lower than 480°C or for an alloying treatment time of less than 5 seconds. When the alloying treatment temperature is higher than 560°C or when the alloying treatment time is more than 60 seconds, the alloying proceeds excessively to deteriorate the powdering properties of the coating. Thus, when alloying treatment is performed, the alloying conditions are 480°C to 560°C for 5 to 60 seconds. The temperature range in which the alloying treatment is performed is preferably 500°C or higher. The temperature range in which the alloying treatment is performed is preferably 540°C or lower. The alloying treatment time is preferably 10 seconds or more. The alloying treatment time is preferably 40 seconds or less.

In the galvanized steel sheet obtained by the above-mentioned galvanizing treatment and alloying treatment, the coating weight of the coating and the Fe content in the coated layer are not particularly limited. For example, the coating weight of the coating can be 20 g/m$^2$ or more per side. The coating weight per side can be 120 g/m$^2$ or less. The Fe content can be 8 mass% or more. The Fe content can be 15 mass% or less.

Second Cooling

Cooling to 100°C or Lower

After the above coating treatment or alloying treatment is performed (after the galvanizing step or after the alloying treatment step), the coated steel sheet is cooled to a cooling stop temperature of 100°C or lower.

A cooling stop temperature of higher than 100°C does not result in the formation of a sufficient amount of martensite when cooling is stopped. A large amount of austenite remains, thereby failing to sufficiently obtain the effect of subsequent reheating. Thus, the cooling stop temperature in the cooling after the alloying treatment is 100°C or lower. The cooling stop temperature is preferably 50°C or lower.

Reheating Treatment

Holding in Temperature Range of 150°C to 450°C for 10 Seconds or More and 72 Hours or Less

The coated steel sheet that has been subjected to the above-mentioned coating treatment or alloying treatment is cooled to 100°C or lower (after the second cooling step), and then reheated and held in a temperature range of 150°C to 450°C for 10 seconds or more and 72 hours or less. Thereby, the martensite is tempered and softened to reduce a difference in hardness between ferrite and martensite, improving the local deformation properties. Furthermore, the amount of diffusible hydrogen in steel can also be reduced.

When the reheating temperature (tempering temperature) is lower than 150°C or when the holding time is less than 10 seconds, the tempering of martensite and the reduction in the amount of diffusible hydrogen in steel are insufficient. When the reheating temperature (tempering temperature) is higher than 450°C or when the holding time is more than 72 hours, the martensite is excessively tempered, thereby failing to obtain desired strength. Thus, in the reheating treatment, the temperature is held in the range of 150°C to 450°C for 10 seconds or more and 72 hours or less.

In this manner, the galvanized steel sheet of the present invention is obtained.

[Member]

A member of the present invention will be described below.

The member according to an embodiment of the present invention is a member obtained using (using as a material) the above-mentioned galvanized steel sheet. For example, a galvanized steel sheet as a base material is subjected to at least one of forming and joining to form a member.

The above-mentioned galvanized steel sheet has excellent uniform deformation properties and local deformation properties and has a tensile strength TS of 980 MPa or more. Thus, the member according to an embodiment of the present invention has excellent uniform deformation properties and local deformation properties and has a tensile strength TS of 980 MPa or more. Therefore, the member according to an embodiment of the present invention is particularly suitable as a material for automotive parts.

[Method for Manufacturing Member]

A method for manufacturing a member according to an embodiment of the present invention will be described below.

A method for manufacturing a member according to an embodiment of the present invention includes a step of subjecting the above-mentioned galvanized steel sheet to at least one of forming and joining to form a member.

The forming method is not particularly limited. For example, a typical processing method, such as press working, can be used. The joining method is not particularly limited. For example, typical welding, such as spot welding, laser welding, and arc welding, and riveting, crimping, and the like can be used. The forming conditions and joining conditions are not particularly limited and may be in accordance with those of usual methods.

EXAMPLES

(Galvanized Steel Sheet)

<Example 1>

Steels having chemical compositions given in Table 1, with the balance being Fe and incidental impurities, was prepared in a converter and cast into steel slabs by a continuous casting method. Each of the resulting steel slabs was hot rolled under the conditions given in Table 2 to a sheet thickness of 3.0 mm. The resulting hot rolled steel sheet was subjected to pickling and then cold rolling to a thickness of 1.4 mm to produce a cold rolled steel sheet. The cold rolled steel sheet was subjected to annealing. The annealing was performed in a continuous galvanizing line (CGL). The threading conditions in CGL are given in Table 2. The conditions for the hot-dip galvanizing treatment were as follows: the steel sheets were immersed in a coating bath at a bath temperature of 475°C and withdrawn. The coating weight was variously adjusted by gas wiping. Then alloying treatment was performed. Some of the steel sheets were not subjected to the alloying treatment but were used as hot-dip galvanized steel sheets. The cooling stop temperature in the first cooling step was 500°C.

[Table 1]

Chemical composition (mass%)

| Steel type | C | Si | Mn | P | S | Al | N | Ti | Nb | Cr | Mo | V | B | Ca | Sb | Remarks |
|---|---|---|---|---|---|---|---|---|---|---|---|---|---|---|---|---|
| A | 0.11 | 0.9 | 2.7 | 0.016 | 0.002 | 0.035 | 0.003 | | | | | | | | | Inventive steel |
| B | 0.14 | 1.5 | 2.3 | 0.002 | 0.003 | 0.029 | 0.006 | 0.03 | | | | | | | | Inventive steel |
| C | 0.23 | 1.2 | 2.1 | 0.008 | 0.001 | 0.025 | 0.005 | | 0.04 | | | | | | | Inventive steel |
| D | 0.09 | 0.6 | 2.4 | 0.019 | 0.004 | 0.032 | 0.003 | | | 0.4 | | | | | | Inventive steel |
| E | 0.12 | 1.7 | 2.9 | 0.030 | 0.003 | 0.043 | 0.002 | | | | 0.3 | | | | | Inventive steel |
| F | 0.15 | 1.4 | 2.4 | 0.045 | 0.002 | 0.023 | 0.004 | | | | | 0.2 | | | | Inventive steel |
| G | 0.17 | 0.7 | 2.6 | 0.015 | 0.001 | 0.038 | 0.005 | 0.02 | | | | | 0.003 | | | Inventive steel |
| H | 0.27 | 1.8 | 2.1 | 0.021 | 0.002 | 0.044 | 0.005 | | | | | | | 0.003 | | Inventive steel |
| I | 0.13 | 1.0 | 2.3 | 0.016 | 0.003 | 0.025 | 0.004 | | | | | | | | 0.02 | Inventive steel |
| <u>J</u> | <u>0.06</u> | 0.9 | 2.3 | 0.035 | 0.003 | 0.035 | 0.005 | | | | | | | | | Comparative steel |
| <u>K</u> | 0.15 | <u>0.3</u> | 2.5 | 0.021 | 0.002 | 0.045 | 0.003 | | | | | | | | | Comparative steel |
| <u>L</u> | 0.15 | 1.2 | <u>1.6</u> | 0.025 | 0.003 | 0.034 | 0.003 | | | | | | | | | Comparative steel |

· The balance consists of Fe and incidental impurities.
· Blank cells indicate no intentional additions.

[Table 2]

| No. | Steel type | Hot rolling | | | | Hot rolled microstructure | Cold rolling | Continuous annealing | | | | | First cooling | Coating (galvanization) | Alloying treatment | | Second cooling | Reheating | |
|---|---|---|---|---|---|---|---|---|---|---|---|---|---|---|---|---|---|---|---|
| | | Heating temperature (°C) | Finish rolling temperature (°C) | Average cooling rate from 800°C to 600°C (°C/s) | Coiling temperature (°C) | Total area fraction of martensite and bainite (%) | Cold rolling reduction ratio (%) | Average heating rate from 500°C to 700°C (°C/s) | Ac$_3$ point (°C) | Maximum arrival temperature (°C/s) | D (*1) | Hydrogen concentration in furnace (vol%) | Average cooling rate from 750°C to 550°C (°C/s) | Type | Alloying temperature (°C) | Alloying time (s) | Cooling stop temperature after coating (°C) | Reheating temperature (°C) | Reheating holding time |
| 1 | A | 1250 | 910 | 60 | 500 | 100 | 50 | 7 | 88-3 | 820 | $1.8\times10^{-6}$ | 10 | 10 | GA | 520 | 10 | 50 | 250 | 60 s |
| 2 | A | 1220 | 900 | 20 | 530 | 55 | 35 | 10 | 88-3 | 810 | $1.5\times10^{-6}$ | 12 | 15 | GA | 520 | 10 | 50 | 200 | 150 s |
| 3 | A | 1150 | 900 | 70 | 450 | 100 | 20 | 10 | 88-3 | 790 | $1.3\times10^{-6}$ | 12 | 15 | GA | 520 | 10 | 50 | 250 | 100 s |
| 4 | A | 1200 | 900 | 50 | 420 | 100 | 50 | 20 | 88-3 | 780 | $\underline{0.8\times10^{-6}}$ | 12 | 15 | GA | 520 | 10 | 50 | 250 | 60 s |
| 5 | A | 1280 | 890 | 50 | 450 | 96 | 50 | 15 | 88-3 | 810 | $2.5\times10^{-6}$ | 10 | $\underline{80}$ | GA | 520 | 10 | 50 | 230 | 100 s |
| 6 | B | 1200 | 910 | 50 | 520 | 82 | 60 | 20 | 90-1 | 800 | $2.1\times10^{-6}$ | 12 | 30 | GA | 540 | 30 | 70 | 300 | 40 s |
| 7 | B | 1180 | 910 | 80 | 600 | $\underline{65}$ | 40 | 15 | 90-1 | 820 | $42\times10^{-6}$ | 10 | 15 | GA | 540 | 30 | 80 | 300 | 40 s |
| 8 | B | 1240 | 910 | 50 | 470 | 90 | 40 | 2 | 90-1 | 830 | $4.7\times10^{-6}$ | 10 | 5 | GA | 540 | 30 | 40 | 300 | 40 s |
| 9 | B | 1200 | 910 | 30 | 350 | 87 | 40 | 30 | 90-1 | 820 | $\underline{8.5\times10^{-6}}$ | 12 | 20 | GA | 540 | 30 | 30 | 300 | 40 s |
| 10 | B | 1200 | 910 | 30 | 520 | 85 | 50 | 10 | 90-1 | 810 | $3.2\times10^{-6}$ | $\underline{25}$ | 10 | GA | 540 | 30 | 30 | 200 | 40 s |

EP 4 474 496 A1

(continued)

| No. | Steel type | Heating temperature (°C) | Finish rolling temperature (°C) | Average cooling rate from 800°C to 600°C (°C/s) | Coiling temperature (°C) | Total area fraction of martensite and bainite (%) | Cold rolling reduction ratio (%) | Average heating rate from 500°C to 700°C (°C/s) | $Ac_3$ point (°C) | Maximum arrival temperature (°C/s) | D (*1) | Hydrogen concentration in furnace (vol%) | Average cooling rate from 750°C to 550°C (°C/s) | Coating type | Alloying temperature (°C) | Alloying time (s) | Cooling stop temperature after coating (°C) | Reheating temperature (°C) | Reheating holding time |
|---|---|---|---|---|---|---|---|---|---|---|---|---|---|---|---|---|---|---|---|
| 1-1 | B | 1200 | 910 | 30 | 520 | 87 | 50 | 10 | 901 | 810 | $2.5\times10^{-6}$ | 10 | $\underline{2}$ | GA | 540 | 30 | 30 | 300 | 40 s |
| 1-2 | C | 1300 | 880 | 80 | 500 | 98 | 50 | 15 | 866 | 800 | $22\times10^{-6}$ | 8 | 30 | GI | No | | 50 | 400 | 40 s |
| 1-3 | C | 1250 | 870 | 50 | 520 | 95 | 60 | 10 | 866 | $\underline{760}$ | $1.1\times10^{-6}$ | 8 | 30 | GI | No | | 50 | 250 | 60s |
| 1-4 | C | 1200 | 880 | 60 | 410 | 92 | 50 | 8 | 866 | 800 | $\underline{0.7\times10^{-6}}$ | 10 | 20 | GI | No | | 50 | 250 | 60s |
| 1-5 | D | 1140 | 900 | 50 | 380 | 100 | 50 | 12 | 876 | 790 | $1.9\times10^{-6}$ | 10 | 7 | GA | 510 | 40 | 40 | 150 | 50h |
| 1-6 | D | 1190 | 890 | 40 | 440 | 100 | 50 | 10 | 876 | 800 | $2.5\times10^{-6}$ | 13 | 10 | GA | 510 | 40 | 150 | 200 | 120 s |
| 1-7 | D | 1200 | 920 | 60 | 480 | 100 | 40 | 15 | 876 | 790 | $\underline{0.6\times10^{-6}}$ | 10 | 8 | GA | 510 | 40 | 60 | 200 | 120 s |
| 1-8 | E | 1280 | 930 | 50 | 500 | 97 | 50 | 10 | 925 | 830 | $3.3\times10^{-6}$ | 17 | 10 | GA | 550 | 25 | 40 | 270 | 100 s |
| 1-9 | E | 1250 | 930 | 50 | 490 | 95 | 50 | 10 | 925 | 840 | $\underline{8.8\times10^{-6}}$ | 14 | 10 | GA | 550 | 25 | 40 | 250 | 120 s |
| 2-0 | F | 1200 | 930 | 40 | 530 | 90 | 60 | 12 | 915 | 810 | $3.0\times10^{-6}$ | 8 | 15 | GA | 540 | 30 | 50 | 200 | 100 s |

| N-o. | St-eel ty-pe | Hot rolling | | | | Hot rolled microstructure | Cold rolling | Continuous annealing | | | | | First cool-ing | Coating (galvani-zation) | Alloying treatment | | Second cooling | Reheating | |
|---|---|---|---|---|---|---|---|---|---|---|---|---|---|---|---|---|---|---|---|
| | | Heating tem-perature (°C) | Finish rolling tem-perature (°C) | Average cool-ing rate from 800°C to 600°C (°C/s) | Coiling temperature (°C) | Total area fraction of martensite and bainite (%) | Cold rolling reduc-tion ratio (%) | Average heat-ing rate from 500°C to 700°C (°C/s) | A-c3 po-int (°C) | Maxi-mum arrival tem-perature (°C/s) | D (*1) | Hydrogen concentration in furnace (vol%) | Average cooling rate from 750°C to 550°C (°C/s) | Type | Alloying tem-perature (°C) | Alloy-ing time (s) | Cooling stop tem-perature after coating (°C) | Reheat-ing tem-perature (°C) | Re-heating holding time |
| 2-1 | F | 1200 | 930 | 40 | 530 | 90 | 60 | 12 | 915 | 790 | $0.7\times10^{-6}$ | 8 | 15 | GA | 540 | 30 | 50 | 200 | 100 s |
| 2-2 | G | 1180 | 930 | 30 | 500 | 100 | 50 | 8 | 858 | 790 | $1.8\times10^{-6}$ | 10 | 10 | GA | 550 | 20 | 40 | 380 | 30 s |
| 2-3 | G | 1180 | 890 | 30 | 500 | 100 | 50 | 8 | 858 | 785 | $0.8\times10^{-6}$ | 10 | 10 | GA | 550 | 20 | 40 | 240 | 100 s |
| 2-4 | H | 1230 | 900 | 40 | 480 | 83 | 55 | 10 | 885 | 820 | $5.3\times10^{-6}$ | 5 | 6 | GA | 550 | 25 | 50 | 180 | 150 s |
| 2-5 | H | 1230 | 900 | 50 | 480 | 85 | 55 | 10 | 885 | 780 | $0.9\times10^{-6}$ | 5 | 6 | GA | 550 | 25 | 50 | 180 | 150 s |
| 2-6 | I | 1200 | 880 | 40 | 520 | 95 | 50 | 12 | 882 | 790 | $2.2\times10^{-6}$ | 16 | 12 | GA | 520 | 15 | 60 | 250 | 80s |
| 2-7 | J | 1240 | 900 | 60 | 530 | 81 | 60 | 10 | 901 | 830 | $1.8\times10^{-6}$ | 12 | 25 | GA | 510 | 20 | 60 | 200 | 90 s |
| 2-8 | K | 1200 | 880 | 50 | 500 | 100 | 50 | 8 | 845 | 785 | $1.5\times10^{-6}$ | 10 | 10 | GA | 510 | 20 | 50 | 230 | 60s |
| 2-9 | L | 1220 | 920 | 50 | 480 | 82 | 60 | 12 | 885 | 810 | $2.2\times10^{-6}$ | 10 | 6 | GA | 540 | 25 | 40 | 200 | 90 s |

(*1) $D = \Sigma((0.486 \times \exp(-33200/(Tn + 268)) \times tn))^{1/2}$

The tensile properties and steel sheet microstructure of each of the galvanized steel sheets obtained as described above were measured in the following manners. Regarding the tensile properties, a JIS No. 5 test piece (JIS Z2201) taken perpendicular to the rolling direction of the steel sheet was used. A tensile test was performed at a strain rate of $10^{-3}$/s in accordance with the requirements of JIS Z2241 (2011) to measure the tensile strength (TS), total elongation (T. El), and ultimate deformability.

The ultimate deformability εl was calculated by measuring the sheet width W and sheet thickness T of the fracture surface of the test piece for the tensile test after the tensile test, measuring the sheet width W0 and sheet thickness T0 of the tensile test piece before the tensile test, and calculating the ultimate deformability εl using the following formula (2):

$$\varepsilon l = -\{\ln(W/W0) + \ln(T/T0)\} \cdots (2)$$

where εl is the ultimate deformability, W is the sheet width (mm) of the fracture surface of the test piece for the tensile test after the tensile test, W0 is the sheet width (mm) of the test piece for the tensile test before the tensile test, T is the sheet thickness (mm) of the fracture surface of the test piece for the tensile test after the tensile test, and T0 is the sheet thickness (mm) of the test piece for the tensile test before the tensile test.

A method for measuring the microstructure (the microstructure of a cross section of the steel sheet) is as follows: A 1 mass% nital solution was used to expose a microstructure. A 1/4 position of a sheet thickness (a position at a depth corresponding to 1/4 of the sheet thickness from a surface) was observed with a scanning electron microscope (SEM) at a magnification of ×3,000. The area fractions of martensite, ferrite, pearlite, and bainite were quantified from the photographed microstructure.

The volume fraction of retained austenite was determined by polishing the steel sheet to a face at the 1/4 position of the sheet thickness in the thickness direction and using the X-ray diffraction intensity on the face at the 1/4 position of the sheet thickness. Co-K$\alpha$ radiation was used as an incident X-ray. Intensity ratios were calculated for all combinations of the integrated peak intensities of the {111}, {200}, {220}, and {311} planes of the retained austenite phase and the {110}, {200}, and {211} planes of the ferrite phase. The average value of these was defined as the volume fraction (area fraction) (%) of retained austenite.

The average grain size of martensite was determined as follows: Observation was performed at a magnification of ×3,000 with the SEM. Photographs of the microstructure taken were used. The area and number of martensite in the field of view of 5,000 to 10,000 $\mu m^2$ were determined. The area was divided by the number to determine an area per martensite crystal grain. The martensite was approximated as a square, and one side of the square was defined as the average grain size.

The proportions of the area fractions of low-Mn ferrite and high-Mn ferrite in the area fraction of the total ferrite were determined as described below.

First, a sample with a cross section of the sheet thickness parallel to the rolling direction of the steel sheet as an observation surface was collected. The observation surface was finished to a mirror surface by mechanical polishing. Thereafter, the distribution of the Mn concentration in the field of view of 5,000 to 10,000 $\mu m^2$ was measured at intervals of 0.1 um by FE-EPMA analysis at the 1/4 positions of the sheet thickness.

Measurement points corresponding to the positions of ferrite were extracted from them. Furthermore, measurement points at which the concentration was 0.80 or more times and 0.95 or less times, or 1.05 or more times and 2.5 or less times the Mn concentration in the steel were extracted. Then, the proportions of the number of measurement points of 0.80 or more times and 0.95 or less times and the number of measurement points of 1.05 or more times and 2.5 or less times of the Mn concentration in the steel with respect to the number of measurement points in the entire ferrite were determined as the proportions of the area fractions of low-Mn ferrite and high-Mn ferrite in the area fraction of the entire ferrite, respectively. Regarding the identification of the position of ferrite in a portion subjected to the FE-EPMA analysis of Mn, the position was identified by measuring a C concentration distribution by FE-EPMA.

The amount of diffusible hydrogen in steel was measured by the following method. First, a test 1specimen of 5 × 30 mm was cut out from the coated steel sheet. The coating of the test specimen was removed with a router, and the test specimen was placed in a quartz tube. The atmosphere in the quartz tube was replaced with Ar. Then the quartz tube was heated at 200 °C/hr. The amount of hydrogen generated up to 250°C was measured with a gas chromatograph. In this manner, the amount of hydrogen released was measured by temperature-programmed analysis method. The cumulative value of the amount of hydrogen detected in a temperature range of room temperature (25°C) to lower than 210°C was defined as the amount of diffusible hydrogen.

The amount of hydrogen was measured after the completion of the production of the steel sheet (after one week).

Table 3 presents the results.

[Table 3]

| No. | Steel type | Microstructure | | | | | | Amount of diffusible hydrogen in steel (mass.ppm) | Galvanized layer | | Tensile properties | | | | Remarks |
|---|---|---|---|---|---|---|---|---|---|---|---|---|---|---|---|
| | | Area fraction of ferrite (%) | Proportion of low-Mn ferrite in area fraction of entire ferrite (%) | Proportion of high-Mn ferrite in area fraction of entire ferrite (%) | Area fraction of martensite (%) | Average crystal grain size of martensite (μm) | Other phases (*1) | | Coating weight (g/m$^2$) | Fe content (mass%) | TS (MPa) | T.El (%) | TS × T.El (MPa %) | Ultimate deformability εl | |
| 1 | A | 50 | 40 | 45 | 45 | 6 | B | 0.18 | 45 | 10 | 1070 | 16 | 17120 | 0.81 | Inventive example |
| 2 | A | 63 | 70 | 12 | 37 | 14 | - | 021 | 45 | 10 | 982 | 13 | 12766 | 0.63 | Comparative example |
| 3 | A | 55 | 45 | 42 | 40 | 12 | B | 0.16 | 45 | 10 | 1010 | 15 | 15150 | 0.68 | Comparative example |
| 4 | A | 57 | 15 | 10 | 38 | 5 | B | 0.20 | 45 | 10 | 985 | 12 | 11820 | 0.65 | Comparative example |
| 5 | A | 38 | 55 | 16 | 58 | 7 | B | 022 | 45 | 10 | 1210 | 10 | 12100 | 0.58 | Comparative example |
| 6 | B | 46 | 34 | 54 | 46 | 5 | B, γ$_R$ | 0.16 | 35 | 13 | 1085 | 17 | 18445 | 094 | Inventive example |
| 7 | B | 58 | 68 | 18 | 35 | 12 | YR | 0.18 | 35 | 13 | 990 | 12 | 11880 | 064 | Comparative example |
| 8 | B | 43 | 51 | 46 | 48 | 14 | B, γ$_R$ | 0.19 | 35 | 13 | 1118 | 17 | 19006 | 0.69 | Comparative example |
| 9 | B | 48 | 80 | 10 | 43 | 5 | B, γ$_R$ | 0.15 | 35 | 13 | 1043 | 13 | 13559 | 0.57 | Comparative example |
| 10 | B | 43 | 53 | 44 | 48 | 6 | B, γ$_R$ | 0.35 | 35 | 13 | 1115 | 16 | 17840 | 0.51 | Comparative example |
| 11 | B | 58 | 41 | 53 | 20 | 8 | P, B | 0.13 | 35 | 13 | 683 | 27 | 18441 | 0.96 | Comparative example |
| 12 | C | 53 | 45 | 47 | 42 | 6 | B | 021 | 50 | - | 1027 | 19 | 19513 | 0.81 | Inventive example |

| No. | Steel type | Microstructure | | | | | | Amount of diffusible hydrogen in steel (mass.ppm) | Galvanized layer | | Tensile properties | | | | Remarks |
|---|---|---|---|---|---|---|---|---|---|---|---|---|---|---|---|
| | | Area fraction of ferrite (%) | Proportion of low-Mn ferrite in area fraction of entire ferrite (%) | Proportion of high-Mn ferrite in area fraction of entire ferrite (%) | Area fraction of martensite (%) | Average crystal grain size of martensite ($\mu$m) | Other phases (*1) | | Coating weight (g/m$^2$) | Fe content (mass%) | TS (MPa) | T.El (%) | TS × T.El (MPa %) | Ultimate deformability $\varepsilon l$ | |
| 13 | C | 65 | 36 | 25 | <u>25</u> | 6 | B | 0.18 | 50 | - | <u>733</u> | 23 | 16859 | 066 | Comparative example |
| 14 | C | 55 | <u>12</u> | <u>14</u> | 38 | 5 | B | 0.20 | 50 | - | 984 | 12 | 11808 | 0.63 | Comparative example |
| 15 | D | 40 | 53 | 34 | 56 | 7 | B | 022 | 70 | 8 | 1218 | 15 | 18270 | 074 | Inventive example |
| 16 | D | 38 | 55 | 30 | 57 | 7 | B | <u>0.37</u> | 70 | 8 | 1229 | 13 | 15977 | 0.52 | Comparative example |
| 17 | D | 43 | <u>15</u> | <u>8</u> | 53 | 6 | B | 0.18 | 70 | 8 | 1183 | 11 | 13013 | 0.62 | Comparative example |
| 18 | E | 45 | 42 | 48 | 55 | 5 | - | 023 | 48 | 11 | 1206 | 16 | 19296 | 0.82 | Inventive example |
| 19 | E | 38 | <u>83</u> | <u>5</u> | 58 | 7 | B | 026 | 48 | 11 | 1239 | 12 | 14868 | 063 | Comparative example |
| 20 | F | 50 | 46 | 43 | 46 | 5 | B | 0.14 | 37 | 10 | 1089 | 17 | 18513 | 0.80 | Inventive example |
| 21 | F | 55 | <u>16</u> | <u>13</u> | 36 | 4 | B, $\gamma_R$ | 0.11 | 37 | 10 | 998 | 14 | 13972 | 0.65 | Comparative example |
| 22 | G | 45 | 55 | 35 | 45 | 7 | B, $\gamma_R$ | 0.18 | 50 | 9 | 1074 | 16 | 17184 | 073 | Inventive example |
| 23 | G | 50 | <u>10</u> | <u>15</u> | 46 | 6 | B | 0.15 | 50 | 9 | 1089 | 13 | 14157 | 0.59 | Comparative example |
| 24 | H | 42 | 44 | 52 | 40 | 6 | B, $\gamma_R$ | 0.19 | 55 | 10 | 994 | 19 | 18886 | 0.91 | Inventive example |

(continued)

| No. | Steel type | Microstructure | | | | | | Amount of diffusible hydrogen in steel (mass.ppm) | Galvanized layer | | Tensile properties | | | | Remarks |
|---|---|---|---|---|---|---|---|---|---|---|---|---|---|---|---|
| | | Area fraction of ferrite (%) | Proportion of low-Mn ferrite in area fraction of entire ferrite (%) | Proportion of high-Mn ferrite in area fraction of entire ferrite (%) | Area fraction of martensite (%) | Average crystal grain size of martensite ($\mu$m) | Other phases (*1) | | Coating weight (g/m$^2$) | Fe content (mass%) | TS (MPa) | T.El (%) | TS × T.El (MPa %) | Ultimate deformability $\varepsilon$l | |
| 25 | H | 53 | 17 | 25 | 42 | 5 | B, $\gamma_R$ | 0.16 | 55 | 10 | 1027 | 15 | 15405 | 0.68 | Comparative example |
| 26 | I | 50 | 45 | 40 | 45 | 6 | B | 0.17 | 45 | 11 | 1074 | 16 | 17184 | 0.78 | Inventive example |
| 27 | J | 65 | 47 | 44 | 23 | 4 | B | 0.13 | 46 | 10 | 721 | 25 | 18025 | 076 | Comparative example |
| 28 | K | 15 | 58 | 26 | 70 | 8 | B | 024 | 50 | 10 | 1310 | 9 | 11790 | 069 | Comparative example |
| 29 | L | 55 | 40 | 43 | 20 | 5 | P, B | 0.12 | 45 | 10 | 635 | 25 | 15875 | 0.94 | Comparative example |

(*1) B: bainite, $\gamma_R$: retained austenite, P: pearlite

25

EP 4 474 496 A1

All of the examples of the present invention exhibit high tensile strength of 980 MPa or more and excellent deformation properties in which TS × T. El, serving as an index of ductility, was 17,000 MPa·% or more, and the ultimate deformability was 0.70 or more.

<Example 2>

Steels having chemical compositions given in Table 1, with the balance being Fe and incidental impurities, was prepared in a converter and cast into steel slabs by a continuous casting method. Each of the resulting steel slabs was hot rolled under the conditions given in Table 4 to a sheet thickness of 3.0 mm. The resulting hot rolled steel sheet was subjected to pickling and then cold rolling to a thickness of 1.4 mm to produce a cold rolled steel sheet. The cold rolled steel sheet was subjected to annealing. The annealing was performed in a continuous galvanizing line (CGL). The threading conditions in CGL are given in Table 4. The conditions for the hot-dip galvanizing treatment were as follows: the steel sheets were immersed in a coating bath at a bath temperature of 475°C and withdrawn. The coating weight was variously adjusted by gas wiping. Then alloying treatment was performed. Some of the steel sheets were not subjected to the alloying treatment but were used as hot-dip galvanized steel sheets. The cooling stop temperature in the first cooling step was 500°C.

For the galvanized steel sheets obtained as described above, the tensile properties (tensile strength (TS), total elongation (T. El), ultimate deformability), the steel sheet microstructure, and the amount of diffusible hydrogen in steel were measured in the same manner as in Example 1.

A U-bending + close bending test, a V-bending + orthogonal VDA bending test, and an axial crushing test were performed in the following manners. The critical spacer thickness (ST) in the U-bending + close bending test, the stroke at maximum load (SFmax) measured in the V-bending + orthogonal VDA bending test, and the presence or absence of fracture (appearance crack) in the axial crushing test were evaluated according to the following criteria.

· ST
∘: 4.0 mm ≥ ST
· SFmax
∘: 26.5 mm ≥ SFmax
· Presence or Absence of Fracture (Appearance Crack) by Axial Crushing

    O: No appearance cracks were observed in the sample after the axial crushing test.
    ∘: One or less appearance cracks were observed on the sample after the axial crushing test.

U-Bending + Close Bending Test

The U-bending + close bending test was performed as described below.

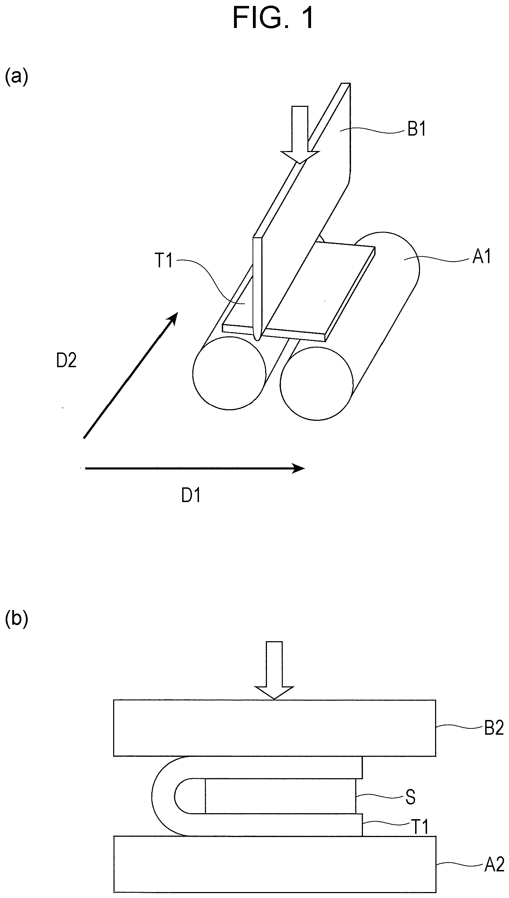

A test sample of 60 mm × 30 mm was taken from each of the obtained galvanized steel sheets by shearing and end face grinding. The 60 mm side is parallel to the width (C) direction. The test sample was subjected to U-bending (primary bending) in the width (C) direction with the rolling (L) direction as the axis at a radius of curvature/sheet thickness of 4.2 to prepare a test specimen. In the U-bending (primary bending), as illustrated in Fig. 1(a), a punch B1 was pressed against a steel sheet placed on rollers A1 to obtain a test specimen T1. As illustrated in Fig. 1(b), the test specimen T1 placed on a lower die A2 was subjected to close bending (secondary bending) by being crushed by an upper die B2. In Fig. 1(a), D1 indicates the width (C) direction, and D2 indicates the rolling (L) direction. Note that a spacer S, which is described below, was placed in the test specimen.

The U-bending conditions in the U-bending + close bending test are described below.

    Test method: roller support, punch pressing
    Punch tip R: 5.0 mm
    Clearance between roller and punch: sheet thickness + 0.1 mm Stroke speed: 10 mm/min
    Bending direction: direction perpendicular to rolling (C) direction

The close bending conditions in the U-bending + close bending test are described below.

    Spacer thickness: different thicknesses in steps of 0.5 mm Test method: die support, punch pressing
    Forming load: 10 tons
    Test speed: 10 mm/min
    Holding time: 5 seconds
    Bending direction: direction perpendicular to rolling (C) direction

The above U-bending + close bending test was performed three times, and the critical spacer thickness (ST) was evaluated when no cracks occurred in all three tests. A crack having a length of 200 um or more at a magnification of ×25 was determined as a crack using a stereomicroscope manufactured by Leica. ST is an index for evaluating the fracture resistance properties during a collision (the fracture resistance properties of the wall portion in the axial crushing test). Table 5 presents the results.

V-Bending + Orthogonal VDA Bending Test

The V-bending + orthogonal VDA bending test is performed as described below.

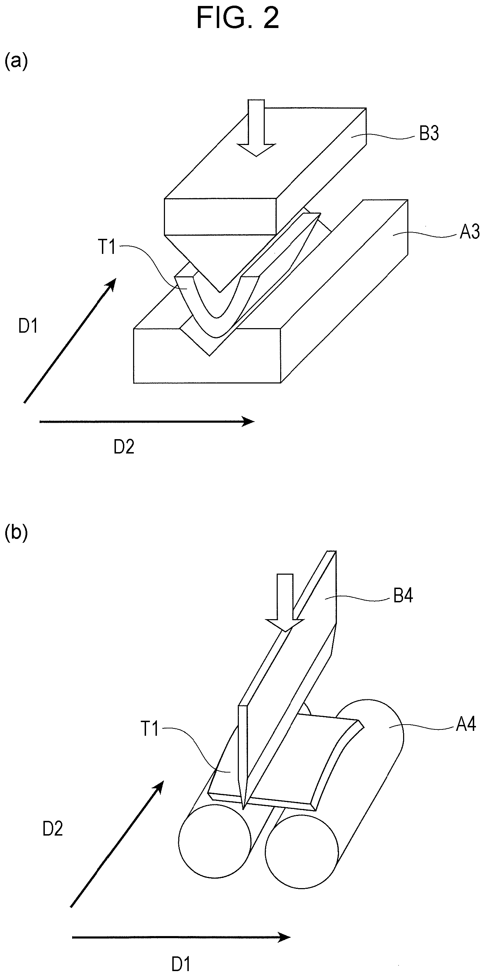

A test sample of 60 mm × 65 mm was taken from each of the obtained galvanized steel sheets by shearing and end face grinding. The 60 mm side is parallel to the rolling (L) direction. The test sample was subjected to 90° bending (primary bending) in the rolling (L) direction with the width (C) direction as the axis at a radius of curvature/sheet thickness of 4.2 to prepare a test piece. In the 90° bending (primary bending), as illustrated in Fig. 2(a), a punch B3 was pressed against a steel sheet placed on a die A3 having a V-groove to obtain a test specimen T1. As illustrated in Fig. 2(b), a punch B4 was pressed against the test specimen T1 placed on support rollers A4 in such a manner that the bending direction was perpendicular to the rolling direction, thereby subjecting the test specimen T1 to orthogonal bending (secondary bending). In each of Fig. 2(a) and Fig. 2(b), D1 indicates the width (C) direction, and D2 indicates the rolling (L) direction.

The V-bending conditions in the V-bending + orthogonal VDA bending test are described below.

Test method: die support, punch pressing
Forming load: 10 tons
Test speed: 30 mm/min
Holding time: 5 seconds
Bending direction: rolling (L) direction

The VDA bending conditions in the V-bending + orthogonal VDA bending test are described below.

Test method: roller support, punch pressing
Roller diameter: ø30 mm
Punch tip R: 0.4 mm
Distance between rollers: (sheet thickness × 2) + 0.5 mm Stroke speed: 20 mm/min
Test specimen size: 60 mm × 60 mm
Bending direction: direction perpendicular to rolling (C) direction

In the stroke-load curve obtained when the above VDA bending is performed, the stroke at the maximum load is determined. The V-bending + orthogonal VDA bending test was performed three times, and the average value of the stroke at the maximum load was defined as SFmax (mm). SFmax is an index for evaluating the fracture resistance properties during a collision (the fracture resistance properties of the bent ridge portion in the axial crushing test). Table 5 presents the results.

Axial Crushing Test

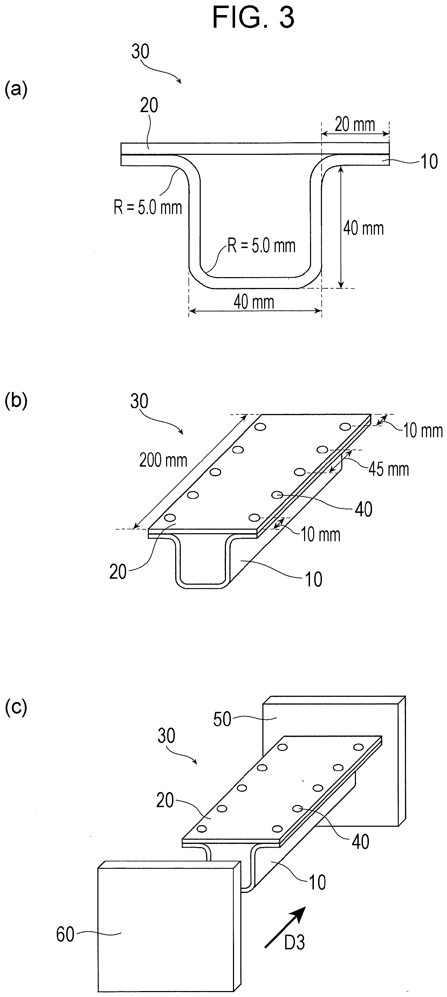

A test specimen of 150 mm × 100 mm was taken from the obtained galvanized steel sheets by shearing. The 150 mm side is parallel to the rolling (L) direction. The test specimen was subjected to forming (bending) to a depth of 40 mm using a die with a punch shoulder radius of 5.0 mm and a die shoulder radius of 5.0 mm to produce a hat-shaped member 10 illustrated in Fig. 3(a) and Fig. 3(b). The steel sheet used as the material of the hat-shaped member was separately cut into a size of 80 mm × 100 mm. The steel sheet 20 thus cut out and the hat-shaped member 10 were spot-welded to produce a test member 30 as illustrated in Figs. 3(a) and Fig. 3(b). Fig. 3(a) is an elevation view of the test member 30 produced by spot-welding the hat-shaped member 10 and the steel sheet 20 together. Fig. 3(b) is a perspective view of the test member 30. As illustrated in Fig. 3(b), spot welds 40 were positioned in such a manner that the distance between an end portion of the steel sheet and a weld was 10 mm and the distance between the welds was 20 mm. As illustrated in Fig. 3(c), the test member 30 was joined to a base plate 50 by TIG welding to prepare a sample for the axial crushing test. An impactor 60 was caused to collide with the resulting sample for the axial crushing test at a constant velocity of 10 mm/min, and the sample for the axial crushing test was crushed by 70 mm. As illustrated in Fig. 3(c), the crushing direction D3 was parallel to the longitudinal direction of the test member 30. Table 5 presents the results.

Nanohardness Measurement

To obtain excellent bendability during press forming and excellent bending fracture properties during a collision, when nanohardness is measured at 300 or more points in a 50 um × 50 um region of a sheet face at the 1/4 position of the depth of a surface soft layer in the thickness direction from a base surface layer, the proportion of the number of measurement points exhibiting a nanohardness of 7.0 GPa or more on the sheet face at the 1/4 position of the depth of the surface soft layer in the thickness direction from the surface of the base steel sheet is preferably 0.10 or less based on the total number of measurement points at the 1/4 position of the depth in the thickness direction. When the proportion of a nanohardness of 7.0 GPa or more is 0.10 or less, it indicates small proportions of a hard microstructure (for example, martensite), inclusions, and the like. Thus, the generation and connection of voids and the propagation of cracks due to the hard microstructure (for example, martensite) and inclusions during press forming and a collision were further inhibited, thereby obtaining excellent ST and SFmax.

After the coating was peeled off, mechanical polishing was performed from the surface of the steel sheet (base steel sheet) to the 1/4 position - 5 um of the depth of the surface soft layer in the thickness direction. Buffing was performed with diamond and alumina from the surface of the base steel sheet to the 1/4 position of the depth of the surface soft layer in the thickness direction. Furthermore, colloidal silica polishing was performed. The nanohardness was measured at a total of 512 points with a Hysitron Tribo-950 using a Berkovich-shaped diamond indenter under the conditions:

load: 500 $\mu$N,
measurement area: 50 um × 50 um, and
indentation intervals: 2 um.

Subsequently, mechanical polishing was performed to the 1/2 position of the depth of the surface soft layer in the thickness direction. Then buffing was performed with diamond and alumina. Furthermore, colloidal silica polishing was performed. The nanohardness was measured at a total of 512 points with the Hysitron Tribo-950 using the Berkovich-shaped diamond indenter under the conditions:

load: 500 $\mu$N,
measurement area: 50 um × 50 um, and
indentation intervals: 2 um.

[Table 4]

| No. | Steel type | Hot rolling | | | | Hot-rolled microstructure | Cold rolling | Coating (metal coating) | Continuous annealing | | | | | | First cooling | Coating (galvanization) | Alloying treatment | | Second cooling | Reheating | |
| | | Heating temperature (°C) | Finish rolling temperature (°C) | Average cooling rate from 800°C to 600°C (°C/s) | Coiling temperature (°C) | Total area fraction of martensite and bainite (%) | Cold rolling reduction ratio (%) | Yes/no [coating type] | Average heating rate from 500°C to 700°C (°C/s) | Ac₃ point (°C) | Maximum arrival temperature (°C/s) | D (*1) | Hydrogen concentration in furnace (vol%) | Dew point (°C) | Average cooling rate from 750°C to 550°C (°C/s) | Type | Alloying temperature (°C) | Alloying time (s) | Cooling stop temperature after coating (°C) | Reheating temperature (°C) | Reheating holding time |
|---|---|---|---|---|---|---|---|---|---|---|---|---|---|---|---|---|---|---|---|---|---|
| 30 | A | 1250 | 910 | 60 | 500 | 100 | 50 | No | 7 | 883 | 820 | $2.0\times10^{-6}$ | 10 | -17 | 10 | GA | 520 | 10 | 50 | 250 | 60 s |
| 31 | A | 1250 | 910 | 60 | 500 | 100 | 50 | No | 7 | 883 | 822 | $2.0\times10^{-6}$ | 10 | 8 | 10 | GA | 520 | 10 | 50 | 250 | 60 s |
| 32 | A | 1250 | 910 | 60 | 500 | 100 | 50 | Yes (Fe) | 7 | 883 | 824 | $2.1\times10^{-6}$ | 10 | -17 | 10 | GA | 520 | 10 | 50 | 250 | 60 s |
| 33 | A | 1250 | 910 | 60 | 500 | 100 | 50 | Yes (Fe) | 7 | 883 | 825 | $2.4\times10^{-6}$ | 10 | 8 | 10 | GA | 520 | 10 | 50 | 250 | 60 s |
| 34 | A | 1250 | 910 | 60 | 500 | 100 | 50 | Yes (Ni) | 7 | 883 | 825 | $2.3\times10^{-6}$ | 10 | 8 | 10 | GA | 520 | 10 | 50 | 250 | 60 s |
| 35 | A | 1250 | 910 | 60 | 500 | 100 | 50 | No | 7 | 883 | 820 | $2.0\times10^{-6}$ | 10 | 8 | 10 | GI | No | | 50 | 250 | 60 s |
| 36 | A | 1250 | 910 | 60 | 500 | 100 | 50 | Yes (Fe) | 7 | 883 | 818 | $2.5\times10^{-6}$ | 10 | -17 | 10 | GI | No | | 50 | 250 | 60 s |
| 37 | A | 1250 | 910 | 60 | 500 | 100 | 50 | Yes (Fe) | 7 | 883 | 815 | $2.5\times10^{-6}$ | 10 | 8 | 10 | GI | No | | 50 | 250 | 60 s |
| 38 | B | 1200 | 910 | 50 | 520 | 82 | 60 | No | 20 | 901 | 800 | $2.1\times10^{-6}$ | 12 | -10 | 30 | GA | 540 | 30 | 70 | 300 | 40 s |
| 39 | B | 1200 | 910 | 50 | 520 | 82 | 60 | No | 20 | 901 | 801 | $2.3\times10^{-6}$ | 12 | 10 | 30 | GA | 540 | 30 | 70 | 300 | 40 s |
| 40 | B | 1200 | 910 | 50 | 520 | 82 | 60 | Yes (Fe) | 20 | 901 | 803 | $1.8\times10^{-6}$ | 12 | -10 | 30 | GA | 540 | 30 | 70 | 300 | 40 s |
| 41 | B | 1200 | 910 | 50 | 520 | 82 | 60 | Yes (Fe) | 20 | 901 | 805 | $1.8\times10^{-6}$ | 12 | 10 | 30 | GA | 540 | 30 | 70 | 300 | 40 s |
| 42 | B | 1200 | 910 | 50 | 520 | 82 | 60 | Yes (Ni) | 20 | 901 | 806 | $2.1\times10^{-6}$ | 12 | 10 | 30 | GA | 540 | 30 | 70 | 300 | 40 s |
| 43 | B | 1200 | 910 | 50 | 520 | 82 | 60 | No | 20 | 901 | 800 | $2.1\times10^{-6}$ | 12 | 10 | 30 | GI | No | | 70 | 300 | 40 s |
| 44 | B | 1200 | 910 | 50 | 520 | 82 | 60 | Yes (Fe) | 20 | 901 | 798 | $1.3\times10^{-6}$ | 12 | -10 | 30 | GI | No | | 70 | 300 | 40 s |
| 45 | B | 1200 | 910 | 50 | 520 | 82 | 60 | Yes (Fe) | 20 | 901 | 796 | $1.3\times10^{-6}$ | 12 | 10 | 30 | GI | No | | 70 | 300 | 40 s |
| 46 | G | 1180 | 930 | 30 | 500 | 100 | 50 | No | 8 | 858 | 790 | $1.5\times10^{-6}$ | 10 | -22 | 10 | GA | 550 | 20 | 40 | 380 | 30 s |
| 47 | G | 1180 | 930 | 30 | 500 | 100 | 50 | No | 8 | 858 | 792 | $1.5\times10^{-6}$ | 10 | 5 | 10 | GA | 550 | 20 | 41 | 381 | 30 s |
| 48 | G | 1180 | 930 | 30 | 500 | 100 | 50 | Yes (Fe) | 8 | 858 | 793 | $1.8\times10^{-6}$ | 10 | -22 | 10 | GA | 550 | 20 | 42 | 382 | 30 s |
| 49 | G | 1180 | 930 | 30 | 500 | 100 | 50 | Yes (Fe) | 8 | 858 | 795 | $1.8\times10^{-6}$ | 10 | 5 | 10 | GA | 550 | 20 | 43 | 383 | 30 s |
| 50 | G | 1180 | 930 | 30 | 500 | 100 | 50 | Yes (Ni) | 8 | 858 | 795 | $1.8\times10^{-6}$ | 10 | 5 | 10 | GA | 550 | 20 | 44 | 384 | 30 s |
| 51 | G | 1180 | 930 | 30 | 500 | 100 | 50 | No | 8 | 858 | 790 | $1.5\times10^{-6}$ | 10 | 5 | 10 | GI | No | | 45 | 385 | 30 s |
| 52 | G | 1180 | 930 | 30 | 500 | 100 | 50 | Yes (Fe) | 8 | 858 | 788 | $1.5\times10^{-6}$ | 10 | -22 | 10 | GI | No | | 46 | 386 | 30 s |
| 53 | G | 1180 | 930 | 30 | 500 | 100 | 50 | Yes (Fe) | 8 | 858 | 786 | $1.5\times10^{-6}$ | 10 | 5 | 10 | GI | No | | 47 | 387 | 30 s |

(*1) $D = \Sigma((0.486 \times \exp(-33200/(Tn + 268)) \times tn))^{1/2}$

## [Table 5]

| No. | Steel type | Microstructure | | | | | | Amount of diffusible hydrogen in steel (mass.ppm) | Surface layer (between base steel and coating layer) | | Galvanized layer | | Nanohardness Hn on sheet face | | | Tensile properties | | | | U-bending + close bending ST (mm) | V-bending + VDA bending SFmax (mm) | Axial crushing characteristics | Remarks |
|---|---|---|---|---|---|---|---|---|---|---|---|---|---|---|---|---|---|---|---|---|---|---|---|
| | | Area fraction of ferrite (%) | Proportion of low-Mn ferrite in area fraction of entire ferrite(%) | Proportion of high-Mn ferrite in area fraction of entire ferrite(%) | Area fraction of martensite (%) | Average crystal grain size of martensite (µm) | Other phases (*1) | | Thickness of soft layer (µm) | Metal coating weight (g/m²) | Coating weight (g/m²) | Fe content (mass.%) | Proportion of Hn of 7.0 GPa or more (*2) | Standard deviation of Hn at 1/4 position (GPa)(*3) | Standard deviation of Hn at 1/2 position (GPa)(*4) | TS (MPa) | T. El (%) | TS × T. El (MPa·%) | Ultimate deformability εl | | | | |
| 30 | A | 50 | 44 | 45 | 45 | 6 | B | 0.18 | 10 | - | 45 | 10 | 0.13 | 2.0 | 2.3 | 1070 | 16 | 17120 | 0.81 | 3.5 | 27.0 | ○ | Inventive example |
| 31 | A | 48 | 45 | 45 | 47 | 6 | B | 0.18 | 38 | - | 45 | 10 | 0.05 | 1.3 | 1.5 | 1074 | 17 | 18258 | 0.81 | 2.5 | 28.1 | ◎ | Inventive example |
| 32 | A | 46 | 48 | 45 | 49 | 6 | B | 0.18 | 14 | 10.0 | 45 | 10 | 0.08 | 1.5 | 1.7 | 1079 | 16 | 17264 | 0.81 | 3.0 | 27.5 | ◎ | Inventive example |
| 33 | A | 45 | 54 | 45 | 50 | 6 | B | 0.18 | 48 | 10.0 | 45 | 10 | 0.02 | 0.7 | 0.9 | 1082 | 17 | 18394 | 0.81 | 1.5 | 28.9 | ◎ | Inventive example |
| 34 | A | 45 | 50 | 45 | 50 | 6 | B | 0.18 | 50 | 10.0 | 45 | 10 | 0.03 | 0.8 | 1.0 | 1082 | 17 | 18394 | 0.81 | 2.0 | 28.8 | ◎ | Inventive example |
| 35 | A | 50 | 44 | 42 | 45 | 6 | B | 0.18 | 39 | - | 45 | 10 | 0.06 | 1.4 | 1.5 | 1070 | 17 | 18190 | 0.81 | 2.5 | 27.9 | ◎ | Inventive example |
| 36 | A | 52 | 51 | 40 | 43 | 6 | B | 0.18 | 15 | 10.0 | 45 | 10 | 0.08 | 1.5 | 1.8 | 1064 | 16 | 17024 | 0.81 | 3.0 | 27.4 | ◎ | Inventive example |
| 37 | A | 53 | 51 | 40 | 42 | 6 | B | 0.18 | 51 | 10.0 | 45 | 10 | 0.03 | 0.7 | 0.9 | 1060 | 17 | 18020 | 0.81 | 2.0 | 28.7 | ◎ | Inventive example |
| 38 | B | 46 | 48 | 40 | 46 | 5 | B, γR | 0.16 | 16 | - | 35 | 13 | 0.14 | 1.9 | 2.3 | 1085 | 17 | 18445 | 0.94 | 3.5 | 27.4 | ○ | Inventive example |
| 39 | B | 45 | 55 | 40 | 47 | 5 | B, γR | 0.16 | 46 | - | 35 | 13 | 0.04 | 1.2 | 1.5 | 1088 | 18 | 19584 | 0.94 | 2.0 | 28.3 | ◎ | Inventive example |
| 40 | B | 44 | 40 | 45 | 48 | 5 | B, γR | 0.16 | 18 | 12.0 | 35 | 13 | 0.08 | 1.6 | 1.8 | 1090 | 17 | 18530 | 0.94 | 2.5 | 27.8 | ◎ | Inventive example |
| 41 | B | 43 | 42 | 45 | 49 | 5 | B, γR | 0.16 | 52 | 12.0 | 35 | 13 | 0.02 | 0.6 | 0.8 | 1092 | 18 | 19656 | 0.94 | 1.5 | 29.2 | ◎ | Inventive example |
| 42 | B | 43 | 45 | 41 | 49 | 5 | B, γR | 0.16 | 49 | 12.0 | 35 | 13 | 0.03 | 0.7 | 0.8 | 1093 | 18 | 19674 | 0.94 | 1.0 | 29.1 | ◎ | Inventive example |
| 43 | B | 46 | 45 | 40 | 46 | 5 | B, γR | 0.16 | 42 | - | 35 | 13 | 0.05 | 1.4 | 1.5 | 1085 | 18 | 19530 | 0.94 | 2.0 | 27.3 | ◎ | Inventive example |
| 44 | B | 48 | 37 | 35 | 44 | 5 | B, γR | 0.16 | 19 | 12.0 | 35 | 13 | 0.08 | 1.6 | 1.9 | 1080 | 17 | 18360 | 0.94 | 2.5 | 27.7 | ◎ | Inventive example |
| 45 | B | 49 | 37 | 36 | 43 | 5 | B, γR | 0.16 | 53 | 12.0 | 35 | 13 | 0.03 | 0.5 | 0.7 | 1078 | 18 | 19404 | 0.94 | 1.5 | 29.0 | ◎ | Inventive example |
| 46 | G | 45 | 42 | 35 | 45 | 7 | B, γR | 0.18 | 9 | - | 50 | 9 | 0.15 | 2.1 | 2.4 | 1074 | 16 | 17184 | 0.73 | 3.5 | 26.8 | ○ | Inventive example |
| 47 | G | 43 | 42 | 35 | 47 | 7 | B, γR | 0.18 | 35 | - | 50 | 9 | 0.05 | 1.4 | 1.6 | 1078 | 17 | 18326 | 0.73 | 2.5 | 27.6 | ◎ | Inventive example |
| 48 | G | 42 | 45 | 40 | 48 | 7 | B, γR | 0.18 | 11 | 10.0 | 50 | 9 | 0.09 | 1.7 | 1.9 | 1080 | 16 | 17280 | 0.73 | 3.0 | 27.2 | ◎ | Inventive example |
| 49 | G | 40 | 45 | 38 | 50 | 7 | B, γR | 0.18 | 40 | 10.0 | 50 | 9 | 0.04 | 0.7 | 1.0 | 1083 | 17 | 18411 | 0.73 | 2.0 | 28.4 | ◎ | Inventive example |
| 50 | G | 40 | 46 | 38 | 50 | 7 | B, γR | 0.18 | 42 | 10.0 | 50 | 9 | 0.03 | 0.8 | 1.1 | 1082 | 17 | 18394 | 0.73 | 2.0 | 28.5 | ◎ | Inventive example |
| 51 | G | 45 | 41 | 42 | 45 | 7 | B, γR | 0.18 | 36 | - | 50 | 9 | 0.06 | 1.5 | 1.7 | 1074 | 17 | 18258 | 0.73 | 2.5 | 27.6 | ◎ | Inventive example |
| 52 | G | 47 | 40 | 41 | 43 | 7 | B, γR | 0.18 | 12 | 10.0 | 50 | 9 | 0.09 | 1.7 | 2.0 | 1070 | 16 | 17120 | 0.73 | 3.0 | 27.3 | ◎ | Inventive example |
| 53 | G | 49 | 38 | 43 | 41 | 7 | B, γR | 0.18 | 43 | 10.0 | 50 | 9 | 0.04 | 0.6 | 0.9 | 1067 | 17 | 18139 | 0.73 | 2.0 | 28.6 | ◎ | Inventive example |

(*1) B: bainite, γR: retained austenite
(*2) The proportion of the number of measurement points exhibiting a nanohardness of 7.0 GPa or more on the sheet face at the 1/4 position of the depth of the surface soft layer in the thickness direction from the surface of the base steel sheet based on the total number of measurement points.
(*3) The standard deviation σ (GPa) of the nanohardness on the sheet face at the 1/4 position of the depth of the surface soft layer in the thickness direction from the surface of the base steel sheet.
(*4) The standard deviation σ (GPa) of the nanohardness on the sheet face at the 1/2 position of the depth of the surface soft layer in the thickness direction from the surface of the base steel sheet.

All of the examples of the present invention exhibited high tensile strength of 980 MPa or more and excellent deformation properties in which TS × T. El, serving as an index of ductility, was 17,000 MPa·% or more, and the ultimate deformability was 0.70 or more.

As presented in Table 5, in all of the examples of the present invention, the critical spacer thickness (ST) in the U-bending + close bending test and the stroke at maximum load (SFmax) measured in the V-bending + orthogonal VDA bending test all passed, and there was no fracture (appearance crack) in the axial crushing test.

Among Nos. 46, 48, and 52, which had a dew point in the range of -30°C to -20°C, No. 46 had the soft layer having a thickness of 14 um or less, and was rated "o" for fracture (appearance crack) in the axial crushing test. In Nos. 48 and 52, which had a coated metal layer even though the thickness of the soft layer was 14 um or less, the fracture (appearance crack) in the axial crushing test was rated "O".

As presented in Table 5, by performing metal coating treatment in the metal coating step and/or performing the continuous annealing step in the atmosphere having a dew point: -5°C or higher in the production conditions, it was possible to obtain a galvanized steel sheet in which the proportion of the number of measurement points exhibiting a nanohardness of 7.0 GPa or more on the sheet face at the 1/4 position of the depth of the surface soft layer in the thickness direction from the surface of the steel sheet was 0.10 or less based on the total number of measurement points at the 1/4 position of the depth of the surface soft layer in the thickness direction, the standard deviation $\sigma$ of the nanohardness on the sheet face at the 1/4 position of the depth of the surface soft layer in the thickness direction from the surface of the base steel sheet was 1.8 GPa or less, and the standard deviation $\sigma$ of the nanohardness on the sheet face at the 1/2 position of the depth of the surface soft layer in the thickness direction from the surface of the base steel sheet was 2.2 GPa or less. In addition, the fracture (appearance crack) in the axial crushing test was rated "◎", and both ST and SFmax were excellent.

(Member)

It was found that since the galvanized steel sheet of the present invention had excellent uniform deformation properties and local deformation properties and has a tensile strength TS of 980 MPa or more, the member obtained by forming, the member obtained by joining, and the member obtained by forming and joining using the galvanized steel sheet of the present invention had excellent uniform deformation properties and local deformation properties and had a tensile strength TS of 980 MPa or more, similarly to the galvanized steel sheet of the present invention.

Reference Signs List

| | |
|---|---|
| 10 | hat-shaped member |
| 20 | galvanized steel sheet |
| 30 | test member |
| 40 | spot weld |
| 50 | base plate |
| 60 | impactor |
| A1 | die |
| A2 | support roller |
| A3 | die |
| A4 | support roller |
| B1 | punch |
| B2 | punch |
| B3 | punch |
| B4 | punch |
| D1 | width (C) direction |
| D2 | rolling (L) direction |
| D3 | crushing direction |
| S | spacer |
| T1 | test specimen |

**Claims**

1. A galvanized steel sheet, comprising a steel sheet and a galvanized layer formed on the steel sheet,

the steel sheet having a chemical composition containing,

by mass%:

C: 0.08% or more and 0.3% or less,
Si: 0.5% or more and 3.0% or less,
Mn: 2.0% or more and 3.5% or less,
P: 0.1% or less,
S: 0.01% or less,
Al: 0.01% or more and 0.1% or less, and
N: 0.015% or less,

the balance being Fe and incidental impurities,
the steel sheet having a microstructure in which an area fraction of ferrite is 20% or more and 70% or less, and an area fraction of martensite is 30% or more and 80% or less,
wherein the ferrite contains:

low-Mn ferrite having a Mn concentration of 0.80 or more times and 0.95 or less times a Mn content of the steel sheet, and
high-Mn ferrite having a Mn concentration of 1.05 or more times and 2.5 or less times the Mn content of the steel sheet,
a proportion of the low-Mn ferrite in the entire ferrite is 20% or more and 80% or less in terms of area fraction,
a proportion of the high-Mn ferrite in the entire ferrite is 20% or more and 80% or less in terms of area fraction,
the martensite has an average crystal grain size of 10 pm or less, and
an amount of diffusible hydrogen in steel is 0.30 mass.ppm or less.

2.  The galvanized steel sheet according to Claim 1, wherein the chemical composition contains, by mass%, one or two selected from:

Ti: 0.2% or less, and
Nb: 0.2% or less.

3.  The galvanized steel sheet according to Claim 1 or 2, wherein the chemical composition contains, by mass%, one or two or more selected from:

Cr: 1.0% or less,
Mo: 1.0% or less, and
V: 1.0% or less.

4.  The galvanized steel sheet according to any one of Claims 1 to 3, wherein the chemical composition contains, by mass%,
B: 0.005% or less.

5.  The galvanized steel sheet according to any one of Claims 1 to 4,
wherein the chemical composition contains, by mass%, one or two selected from:

Ca: 0.005% or less, and
Sb: 0.03% or less.

6.  The galvanized steel sheet according to any one of Claims 1 to 5, wherein when a region extending from a surface of the steel sheet to a position 200 pm or less from the surface of the steel sheet in a thickness direction is defined as a surface layer, the surface layer has a surface soft layer having a Vickers hardness of 85% or less of a Vickers hardness at a 1/4 position of a sheet thickness,

when nanohardness is measured at 300 or more points in a 50 pm × 50 pm region of a sheet face at each of a 1/4 position and a 1/2 position of a depth of the surface soft layer in the thickness direction from the surface of the steel sheet,
a proportion of the number of measurement points exhibiting a nanohardness of 7.0 GPa or more on the sheet face at the 1/4 position of the depth of the surface soft layer in the thickness direction from the surface of the steel sheet is 0.10 or less based on a total number of measurement points at the 1/4 position of the depth of the surface soft layer in the thickness direction, a standard deviation σ of the nanohardness on the sheet face at the 1/4 position of the depth of the surface soft layer in the thickness direction from the surface of the steel sheet is 1.8 GPa or less, and

a standard deviation σ of the nanohardness of the sheet face at the 1/2 position of the depth of the surface soft layer in the thickness direction from the surface of the steel sheet is 2.2 GPa or less.

7. The galvanized steel sheet according to any one of Claims 1 to 6, further comprising a coated metal layer formed between the steel sheet and the galvanized layer on one or both sides of the galvanized steel sheet.

8. The galvanized steel sheet according to any one of Claims 1 to 7, wherein the galvanized layer has an Fe content of 8 to 15 mass%, and a coating weight per side of 20 to 120 g/m$^2$.

9. A member obtained using the galvanized steel sheet according to any one of Claims 1 to 8.

10. A method for manufacturing a galvanized steel sheet, comprising:

a hot rolling step of hot-rolling a steel slab having the chemical composition according to any one of Claims 1 to 5 to provide a hot rolled steel sheet having a microstructure having a total area fraction of bainite and martensite of 80% or more;

a pickling step of pickling the resulting hot rolled steel sheet;

after the pickling step, a cold rolling step of performing cold rolling at a cold rolling reduction ratio of 30% or more and 80% or less to provide a cold rolled steel sheet;

a continuous annealing step of subjecting the cold rolled steel sheet to continuous annealing;

after the continuous annealing step, a first cooling step of cooling the resulting cold rolled steel sheet to 550°C or lower at an average cooling rate of 3 °C/s or more and 50 °C/s or less in a temperature range of 750°C to 550°C;

after the first cooling step, a galvanizing step of performing galvanizing treatment;

a second cooling step of cooling a coated steel sheet after the galvanizing step to 100°C or lower; and

a reheating step of holding the coated steel sheet after the second cooling step in a temperature range of 150°C to 450°C for 10 seconds or more and 72 hours or less, wherein in the continuous annealing step,

an average heating rate from 500°C to 700°C is 3 °C/s or more,

D in the following formula (1) satisfies $1.0 \times 10^{-6}$ or more and $8.0 \times 10^{-6}$ or less at 780°C or higher and lower than 940°C,

heating is performed to a maximum arrival temperature of 780°C or higher and lower than or equal to (an Ac$_3$ point - 20°C), and

a hydrogen concentration in an annealing furnace in a temperature range of 780°C or higher is 1 vol% or more and 20 vol% or less,

[Math. 1]

$$D= \sum_{i=0}^{15} ((0.486 \times \exp(-33200/(T_i + 268)) \times t_i))^{1/2}$$

$$\cdots \text{ formula (1)}$$

where in formula (1),

$t_i$: a residence time (s) in a temperature range of $T_i$°C or higher and lower than $T_i$ + 10°C,

$T_i$ (°C): 780 + i × 10 (i: an integer of 0 to 15), and

the residence time $t_i$ (s) in a temperature range higher than the maximum arrival temperature is 0 seconds.

11. The method for manufacturing a galvanized steel sheet according to Claim 10, wherein the continuous annealing in the continuous annealing step is performed in an atmosphere having a dew point: -30°C or higher.

12. The method for manufacturing a galvanized steel sheet according to claim 10 or 11, further comprising a metal coating step of subjecting one or both sides of the cold rolled steel sheet after the cold rolling step and before the continuous annealing step to metal coating to form a coated metal layer.

13. The method for manufacturing a galvanized steel sheet according to any one of Claims 10 to 12, further comprising an alloying treatment step of subjecting the coated steel sheet to alloying treatment in a temperature range of 480°C to 560°C for 5 to 60 seconds after the galvanizing step and before the second cooling step.

14. A method for manufacturing a member, comprising a step of subjecting the galvanized steel sheet according to any one of Claims 1 to 8 to at least one of forming and joining to form a member.

# FIG. 1

(a)

(b)

# FIG. 2

(a)

(b)

# FIG. 3

(a)

(b)

(c)

## INTERNATIONAL SEARCH REPORT

| International application No. |
| --- |
| **PCT/JP2022/047834** |

**A. CLASSIFICATION OF SUBJECT MATTER**

*C21D 9/46*(2006.01)i; *C22C 18/00*(2006.01)i; *C22C 38/00*(2006.01)i; *C22C 38/06*(2006.01)i; *C22C 38/60*(2006.01)i
FI:   C22C38/00 301T; C21D9/46 J; C22C38/06; C22C38/60; C22C18/00; C22C38/00 301S; C22C38/00 301W

According to International Patent Classification (IPC) or to both national classification and IPC

**B. FIELDS SEARCHED**

Minimum documentation searched (classification system followed by classification symbols)
    C21D9/46; C22C38/00-C22C38/60

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/024748 A1 (JFE STEEL CORP.) 11 February 2021 (2021-02-11) entire text | 1-14 |
| A | WO 2015/141097 A1 (KK KOBE SEIKO SHO) 24 September 2015 (2015-09-24) entire text | 1-14 |
| A | WO 2017/168958 A1 (JFE STEEL CORP.) 05 October 2017 (2017-10-05) entire text | 1-14 |
| A | WO 2021/140663 A1 (JFE STEEL CORP.) 15 July 2021 (2021-07-15) entire text | 1-14 |
| A | JP 2020-111770 A (JFE STEEL CORP.) 27 July 2020 (2020-07-27) entire text | 1-14 |
| A | JP 2007-92132 A (JFE STEEL CORP.) 12 April 2007 (2007-04-12) entire text | 10-14 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 February 2023** | **21 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/047834**

| Patent document cited in search report | | | Publication date (day/month/year) | Patent family member(s) | | | Publication date (day/month/year) |
|---|---|---|---|---|---|---|---|
| WO | 2021/024748 | A1 | 11 February 2021 | US<br>entire text<br>EP<br>CN<br>KR | 2022/0275471<br><br>4012055<br>114207170<br>10-2022-0033519 | A1<br><br>A1<br>A<br>A | |
| WO | 2015/141097 | A1 | 24 September 2015 | US<br>entire text<br>CN<br>KR<br>KR | 2017/0096723<br><br>106103768<br>10-2016-0132926<br>10-2018-0061395 | A1<br><br>A<br>A<br>A | |
| WO | 2017/168958 | A1 | 05 October 2017 | US<br>entire text<br>EP<br>CN<br>KR | 2020/0270717<br><br>3418419<br>108884534<br>10-2018-0119618 | A1<br><br>A1<br>A<br>A | |
| WO | 2021/140663 | A1 | 15 July 2021 | EP<br>entire text<br>KR<br>CN | 4067513<br><br>10-2022-0110826<br>114981457 | A1<br><br>A<br>A | |
| JP | 2020-111770 | A | 27 July 2020 | (Family: none) | | | |
| JP | 2007-92132 | A | 12 April 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010106323 A

- JP 11279691 A